(19) Europäisches Patentamt
European Patent Office
Office européen des brevets

(11) **EP 4 080 250 A1**

(12) **EUROPEAN PATENT APPLICATION**

(43) Date of publication:
**26.10.2022 Bulletin 2022/43**

(21) Application number: **22305571.6**

(22) Date of filing: **19.04.2022**

(51) International Patent Classification (IPC):
**G01V 1/36** *(2006.01)*

(52) Cooperative Patent Classification (CPC):
**G01V 1/364;** G01V 2210/56; G01V 2210/675

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2021 US 202163178114 P**
**01.09.2021 US 202163239515 P**

(71) Applicant: **CGG SERVICES SAS**
**91300 Massy (FR)**

(72) Inventor: **POOLE, Gordon**
**91300 MASSY (FR)**

(74) Representative: **Ipsilon**
**Le Centralis**
**63, avenue du Général Leclerc**
**92340 Bourg-la-Reine (FR)**

(54) **MULTIPLE ATTENUATION AND IMAGING PROCESSES FOR RECORDED SEISMIC DATA**

(57)  A method for multiple attenuation in seismic data associated with a subsurface includes receiving (900) seismic data $D$ for a plurality of shots and a plurality of receivers, where the seismic data $D$ include multiples $M$ associated with a free surface; obtaining (902) a multiple generator (722), which is located within the subsurface and is responsible for generating the multiples $M$; calculating (904) a source-side multiple model $M_S$ based on the seismic data $D$ and the multiple generator (722); estimating (906) an image $r$ of the multiple generator (722) based on a multiple periodicity method applied to the seismic data $D$; calculating (908) a receiver-side multiple model $M_R$; generating (910) demultiple data $DD$ by subtracting from the seismic data $D$ the source-side multiple model $M_S$ and the receiver-side multiple model $M_R$; and generating (912) a final image of a geological formation based on the demultiple data $DD$.

RECEIVE INPUT DATA — 900

OBTAIN MULTIPLE GENERATOR — 902

CALCULATE SOURCE-SIDE MULTIPLE MODEL — 904

ESTIMATE IMAGE USING INPUT DATA — 906

CALCULATE RECEIVER-SIDE MULTIPLE MODEL — 908

CALCULATE THE DEMULTIPLE DATA — 910

CALCULATE IMAGE OF SUBSURFACE — 912

FIG. 9

EP 4 080 250 A1

**Description**

**BACKGROUND**

**TECHNICAL FIELD**

Embodiments of the subject matter disclosed herein generally relate to processing seismic data acquired over land or water and, more specifically, to identifying multiples included in the recorded seismic data and attenuating them.

**DISCUSSION OF THE BACKGROUND**

Hydrocarbon exploration and development uses waves (e.g., seismic waves or electromagnetic waves) to explore the structure of underground formations on land and at sea (i.e., formations in the subsurface). These waves are collected during a seismic acquisition campaign, either on land or on water. Energy generated by a seismic source propagates as seismic waves downward into a geological formation, and part of the energy is reflected and/or refracted back up to the surface. Characteristics of the reflected/refracted energy detected by seismic sensors are used to produce an image of the earth's reflectivity.

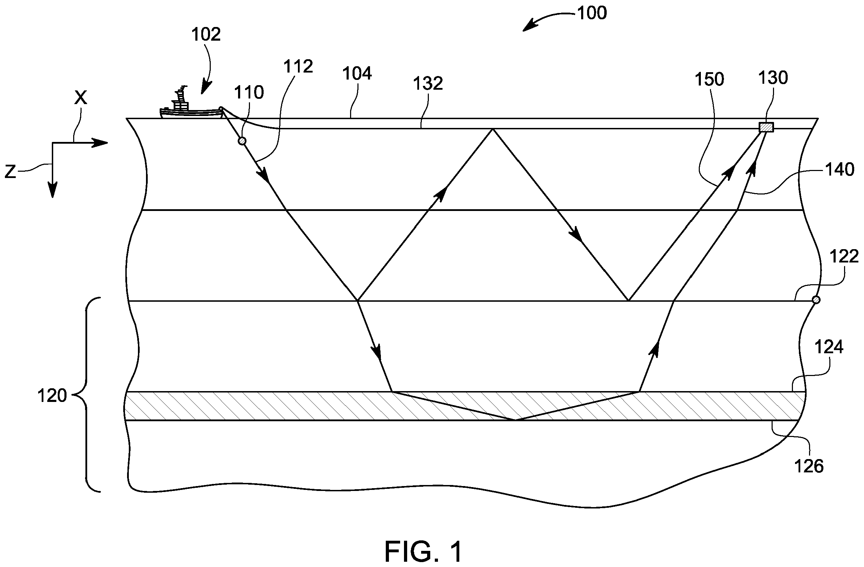

As schematically illustrated in Figure 1, when a marine seismic acquisition system 100 is used, waves 112 emitted by a source 110 at a known location penetrate an unexplored formation 120 and are reflected at plural interfaces 122, 124, 126 that separate the formation's layers, as they have different layer impedances. Sensors 130 (only one shown for simplicity), which are distributed along a streamer 132 towed by a vessel 102 (for the case of a marine seismic survey), detect the reflected waves 140, 150. The detected waves 140, 150 include primary reflections such as wave 140, which travel directly from a formation interface to a sensor, and multiple reflections such as wave 150, which additionally undergo at least one more downward reflection and one upward reflection. In the case of wave 150, the downward reflection is at the water surface and the upward reflection is at reflector 122. Note that, as used herein, the term "formation" refers to any geophysical structure into which source energy is promulgated to perform seismic surveying, e.g., land or water based, such that a "formation" may include a water layer when the context is marine seismic surveying.

There are various types of multiples, e.g., surface-related multiples and interbed multiples. In the case of surface-related multiples, when the energy reflected from the subsurface reaches the water surface 104, it will be reflected back downwards into the water column and subsurface. This produces a second set of reflected energy containing spurious events. Interbed multiples are similar, but in this case the downward reflecting surface is a rock interface in the subsurface.

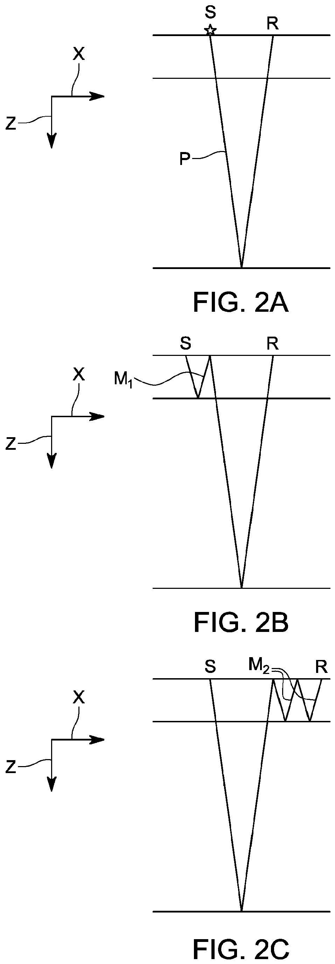

Moreover, multiples can be characterized as belonging to different orders, e.g., first order, second order, third order, etc., based on the number of additional reflections involved. For example, a primary P has a single reflection between a source S and a receiver R as shown in Figure 2A. By way of contrast, a first order multiple $M_1$ (shown in Figure 2B) can have two additional reflections relative to the primary P, whereas a second order multiple $M_2$ (shown in Figure 2C) can have four additional reflections.

In order to understand the structure of the explored underground formation, it is preferable that primaries and multiples be separated as part of the processing of the recorded seismic data, and frequently it is preferable to remove the multiples. Accordingly, there are numerous processing techniques which have been developed to attenuate or suppress multiples in the recorded seismic data. These include, just to name a few, Radon demultiple, surface-related multiple elimination (SRME, [9]), deconvolution [1], Green's function modelling and inverse scattering. As will be appreciated by those skilled in the art, each of these techniques has its strengths and weaknesses. Also, each of these techniques is known in the art and thus, the details associated with these techniques are not presented herein.

The success of surface-related multiple attenuation in shallow water environments is limited by an absence of near offsets (i.e., when the distance between the source 110 and the closest sensor 130 is smaller than 500 m) and a lack of high-quality water bottom primary reflections in the recorded data. Together with amplitude errors arising from cross-talk between multiples (for example relating to convolution of recorded data with itself rather than recorded data and primary as theoretically required by SRME), these factors have been cited as causing the breakdown of SRME in shallow water. The shallow water is understood herein to mean a depth of the ocean bottom of less than 1,000 m.

SRME uses convolutions and summations to estimate the multiple energy. With sufficient sampling of sources and receivers, this approach may produce a multiple model with the correct kinematic timing. Any amplitude, timing or phase errors are usually subsequently corrected with adaptive subtraction of the multiple model from the original data. However, the SRME method is difficult to use when the input data is not sufficiently well spatially sampled. In addition, the SRME method relies on an adaptive subtraction step.

Yet another method known as "deconvolution" may be applied either in the offset-time or a model (e.g. tau-p) domain. This method derives a prediction operator based on an auto-correlation of the data. The auto-correlation, which contains energy at the multiples periods, is used to derive a deconvolution operator (based on user parameters) to be applied to the data. This deconvolution method is often only suitable for short-period multiples and for simple structures. Modern strategies include the use of multi-channel prediction operators to improve the accuracy of the prediction. One important category of short-period multiples is Water-Layer Related Multiples (WLRM) which are typically defined to be any multiple involving at least one additional upgoing reflection from the sea floor travelling through the water layer. Multi-channel deconvolution reduces the impact of the missing near offsets and the poorly recorded water bottom primary, but these data-derived prediction operators are susceptible to contamination by noise and other events unrelated to the WLRMs. It is also possible to model multiples with this approach for events below the water bottom or more generally for a given reflectivity section, see, e.g., Biersteker [1].

Wang [2] proposed a Model-based Water-Layer Demultiple (MWD) approach to estimate WLRMs based on a Green's function derived from a known water depth. In this context, a Green's function can be defined to be an impulse response for a point source located at the sea floor, propagating through the water layer with a known velocity. The Green's function may contain some reflectivity information, but in general this will not be the case. With a sufficiently accurate Green's function, the MWD method gives rise to a model predicting the timing of the multiples with a high degree of accuracy.

While the MWD method accurately predicts the timing of multiples, it does so with errors regarding the relative amplitude of those multiples having an order greater than one. This amplitude problem is described in more detail later. Accordingly, it remains desirable to develop systems and techniques for identifying and removing multiples, generally, and also to address this particular amplitude issue with the MWD technique.

Another method known as "wave-equation modeling" produces a multiple model by forward extrapolating seismic reflections into the subsurface, creating a reflecting wavefield, and forward extrapolating on to the receiver datum. The extrapolation step requires a reflectivity and velocity model. This method is suitable for modeling long-period multiples and relies on an adaptive subtraction step as well as some knowledge of the subsurface (e.g., reflectivity and velocity).

According to yet another method known as "inverse scattering," a multiple model is predicted by constructing a subseries of the scattering series, which corresponds to the multiples and may be used for 2D and 3D multiple prediction. This method also requires dense source and receiver (i.e., detector) sampling.

As known in the seismic field, each of the methods discussed in this section can be ineffective under certain conditions/environments, especially for shallow water situations. Therefore, multiples removal remains a subject of continuing research, with new opportunities and challenges occurring as data acquisition systems evolve.

## SUMMARY

According to an embodiment, there is a method for multiple attenuation in seismic data associated with a subsurface. The method includes receiving seismic data $D$ for a plurality of shots and a plurality of receivers, where the seismic data D include multiples M associated with a free surface, where the seismic data D is in a space-time domain, obtaining a multiple generator, which is located within the subsurface and is responsible for generating the multiples $M$, calculating a source-side multiple model Ms based on the seismic data $D$ and the multiple generator, estimating an image $r$ of the multiple generator based on a multiple periodicity method applied to the seismic data $D$, calculating a receiver-side multiple model $M_R$ by applying wavefield propagation to the seismic data $D$ and the image $r$, generating demultiple data $DD$ by subtracting from the seismic data $D$ the source-side multiple model $M_S$ and the receiver-side multiple model $M_R$, and generating a final image of a geological formation in the subsurface based on the demultiple data $DD$.

According to another embodiment, there is a computing system for multiple attenuation in seismic data associated with a subsurface. The computing system includes an interface configured to receive seismic data $D$ for a plurality of shots and a plurality of receivers, wherein the seismic data $D$ include multiples $M$ associated with a free surface, wherein the seismic data D is in a space-time domain, and a processor connected to the interface. The processor is configured to obtain a multiple generator, which is located within the subsurface and is responsible for generating the multiples $M$, calculate a source-side multiple model $M_S$ based the seismic data D and the multiple generator, estimate an image $r$ of the multiple generator based on a multiple periodicity method applied to the seismic data $D$, calculate a receiver-side multiple model $M_R$ by applying wavefield propagation to the seismic data D and the image $r$, generate demultiple data $DD$ by subtracting from the seismic data D the source-side multiple model $M_S$ and the receiver-side multiple model $M_R$, and generate a final image of a geological formation in the subsurface based on the demultiple data $DD$.

According to yet another embodiment, there is a non-transitory computer readable medium including computer executable instructions, wherein the instructions, when executed by a processor, implement the method discussed above.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram illustrating seismic data that includes primaries and multiples;

Figure 2A shows a primary, and Figures 2B and 2C show source-side and receiver-side multiples, respectively;

Figure 3 schematically illustrates a wavefield that is forward propagated from a source, multiplied with a reflectivity at a given datum, and then being propagated to a receiver;

Figure 4 schematically illustrates the forward propagation of a source wavelet and reverse propagation of a primary wavefield recorded at a receiver to a given datum, for example, the ocean bottom;

Figure 5 schematically illustrates the forward propagation of a primary wavefield and the reverse propagation of a multiple wavefield to a given datum, for example, the ocean bottom;

Figures 6A to 6E show multiples generated below a complex basaltic sill feature, with Figure 6A showing the input data migration, Figure 6B showing the time slice of the input, Figure 6C showing the receiver-side targeted multiple estimate, Figure 6D showing the source-side targeted multiple estimate, and Figure 6E showing the receiver-side multiple estimate using wave-equation deconvolution;

Figure 7A illustrates a receiver-side multiple $M_R$ that relies on a shot domain while Figure 7B illustrates a source-side multiple $M_S$ that relies on a receiver domain;

Figures 8A to 8D illustrate the generation of plural multiple orders using the Pica approach in the space-depth domain;

Figure 9 is a flow chart of a method for multiple attenuation based jointly on a source-side targeted multiple model and a receiver-side multiple model from wave-equation deconvolution;

Figure 10A illustrates a set of seismic data collected for a given subsurface, Figure 10B illustrates the demultiple calculated from the set of Figure 10A using a known demultiple method, and Figure 10C illustrates the demultiple calculated using the novel method illustrated in Figure 9;

Figure 11 illustrates the multiple contributions from the source-side and receiver-side;

Figure 12 is a flow chart of a method for multiple imaging using shot-domain and receiver-domain datasets;

Figure 13 is a flow chart of a method for optimized multiple migration using a cross-talk attenuation migration as a starting point;

Figure 14 is a flow chart of a method for combining ocean bottom sensor multiple imaging with nearfield sensor imaging;

Figure 15 is a flow chart of a method for attenuating residual multiples;

Figure 16A illustrates multiple imaging of recorded hydrophone data, Figure 16B illustrates multiple imaging of data after up-down deconvolution, and Figure 16C illustrates multiple generators addressed by up-down deconvolution;

Figure 17 is a flow chart of a method for imaging seismic data acquired during a timelapse seismic survey; and

Figure 18 is a schematic diagram of a computing device configured to implement methods for processing data according to an embodiment.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to a marine seismic data acquisition. However, similar embodiments and methods may be used for a land data acquisition system.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to various embodiments, a process of multiple attenuation is implemented based on (1) a joint source-side targeted multiple model $M_S$ and a receiver-side multiple model $M_R$ from wave-equation deconvolution, or (2) multiple imaging jointly from shot and receiver domains, or (3) optimized multiple migration using a cross-talk attenuated migration as a starting point, or (4) combined ocean bottom sensor multiple imaging with nearfield sensor imaging, or (5) attenuation of residual multiples, or (6) timelapse imaging. Each of these possible implementations of the process of multiple attenuation is discussed later in more detail. Before discussing such processes, a couple of concepts and terms are briefly introduced and defined.

The term "combined imaging of primaries and multiples" is understood herein as generating an image of the subsurface based on both primaries and multiples. This step may involve combining primary and multiple images after migration, or by jointly imaging primary and multiple arrivals in a single imaging step.

An "image" of the surveyed subsurface may relate to a single image, as defined later by the reflectivity $r$ of a plane in the subsurface, but may also relate to an "extended image", for example, with subsurface offsets for one or more of the x-, y-, or z-directions and/or with non-zero lag arrivals (e.g., as with tau-gathers). In this case, the extended image of the subsurface may be described by: subsurface offsets, $r(o_x, o_y, o_z, x, y, z)$; example for subsurface offsets in x, y, and z, or tau-gathers: $r(\tau, x, y, z)$. Alternatively, it is possible to have different images for different surface offset ranges. Additionally, the image may include terms to describe a reflection as a function of reflection angle in the sub-surface.

An image of the subsurface is generally understood to be a representation of the reflectivity in the earth, defined in space (x-z for 2D, and x-y-z for 3D). This may also be referred to as a migration, the migrated image or the reflectivity. Thus, these terms are used interchangeably herein. An image of the subsurface may be the result of a single-step or optimized migration.

In some embodiments, to form an image, an imaging condition may need to be applied to the data. In one application, the imaging condition is a mathematical function applied to the extrapolated down-going and up-going wavefields to form the image. The most common imaging condition is the cross-correlation imaging condition. Other options are the deconvolution imaging conditions, a variety of which are known in the field, for example, smoothing imaging condition, 2D deconvolution imaging condition or multi-dimensional deconvolution imaging condition.

The migration, also known as imaging, is a term used to generate an image of the subsurface from sensor recordings following the excitation of a source. Wave-equation migration is commonly applied in the shot domain or in the receiver domain. In the shot domain, a group of traces corresponding to different sensor positions are used for one shot excitation. In the receiver domain, a group of traces are used for one receiver position corresponding to different shot excitations.

There are different types of migration: e.g., one-way migration, two-way reverse time migration (RTM), Kirchhoff migration, common reflection angle migration (CRAM), Wave equation Kirchhoff migration (WEK), etc. One type of migration is an optimized migration. The migration may use an extended image. The migration may be of primaries, multiples, or a combination of primaries and multiples. Recorded data used for the migration may be pre-processed prior to the migration.

An image of the subsurface may be used to "model" primaries and/or model multiples, e.g., Born modelling. This process may also be known as demigration. This process essentially generates the primaries and/or multiples that describe the image. Modelling may be performed with Kirchhoff (e.g., diffraction modelling), one-way propagation, two-way propagation, etc.

A selection of multiples have been schematically illustrated in Figures 1 to 2C. Primary arrivals P correspond to a signal leaving the source S, interacting once with the subsurface (e.g., reflection, refractions or diffractions), and being recorded by the receiver R. In the case there are two more reflections, that event is called a multiple *M*. First order free-surface multiples $M_1$ may relate to two interactions in the subsurface and one reflection at the free-surface (water-air interface). With higher order multiples, these interactions may take place more than once. Internal multiples may include at least two upward interactions and one downward interaction in the subsurface. Raw seismic data will include a mixture of primaries, surface related multiples, and internal multiples. It is an objective of the methods discussed herein to model and attenuate multiples in the raw data, so that the primary arrivals may be imaged.

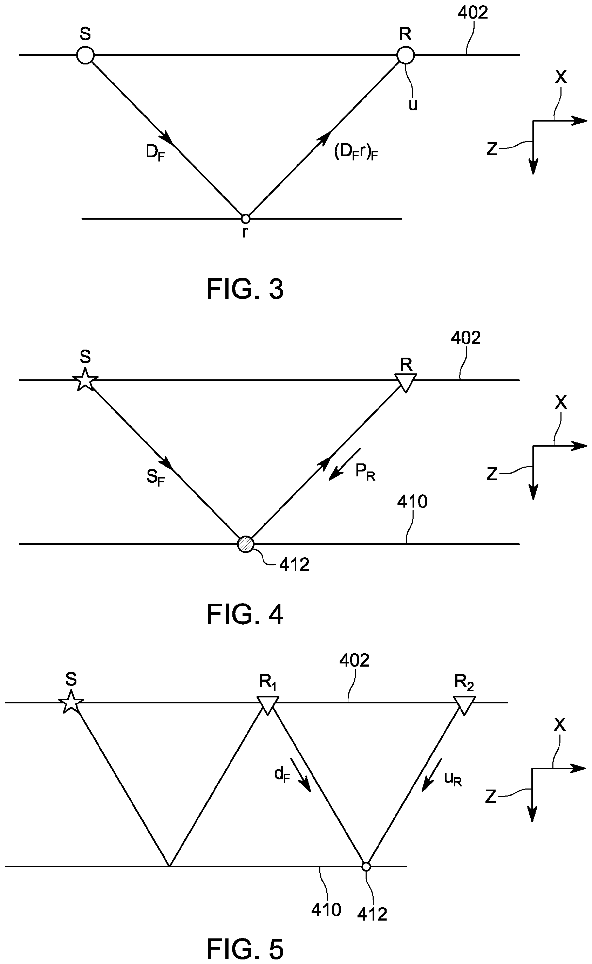

Multiple modelling and/or prediction, also known as surface related multiple modelling (SRMM), see [2], is used to estimate multiples in the space-time domain using recorded data D and an image of the subsurface r, as illustrated by the following equation: $u = [D_F r]_F$. In this case, the forward extrapolated down-going wavefield, $D_F$, reflects from the image of the subsurface, r, to generate a reflecting wavefield, $D_F r$, as schematically illustrated in Figure 3. The reflected wavefield is subsequently extrapolated forward as the up-going field, u, at the recording positions. These modelled up-going data will contain only multiples.

An optimized migration is an inverse problem where the goal is to find an image r of the subsurface, which when demigrated, respects the input data *D*. In other words, it is desired to find an image of the subsurface such that when it is used to model (simulate) data in the space-time domain, it should equal the recorded data. This may be the result of a least-squares inversion, based on the following definitions:

$D_F(t, x, y, z)$ : Forward extrapolated down-going wavefield;
$u_R(t, x, y, z)$ : Up-going wavefield, reverse extrapolated into the subsurface; and
$r(x, y, z)$ : Image of the subsurface.

In the following equation, the forward extrapolated wavefield, $D_F$, is transformed into a reflecting wavefield through multiplication by the image of the subsurface, *r*. Ideally, it is desired to find an image of the subsurface which results in a reflecting wavefield that equals the reverse extrapolated up-going wavefield, $u_R$, for every depth step. An exact solution in practice is generally not possible, hence the following approximation is used:

$$u_R \approx D_F r.$$

This may be expressed as a minimization of the difference between both sides of the previous equation, for example, with an L2 norm (other norms may be used, e.g., L1, Cauchy, etc):

$$r = \arg\min\|u_R - D_F r\|_2^2.$$

Alternatively, the optimization may be expressed as a maximization of the similarity between both sides of the equation, for example, with a zero-lag cross-correlative norm (other norms may be used, e.g., including appropriate normalization of the up- and down-going data, etc.):

$$r = \arg\max\|u_R * D_F r\|_{\tau=0}.$$

It is also possible to pre-multiply both sides of the minimization equation by the adjoint of $D_F$ (i.e., the adjoint modelling operator), as shown below. This allows many stable solvers to be used, e.g., conjugate gradients, steepest descent, etc.

$$D_F^T u_R \approx D_F^T D_F r.$$

The left-hand side of this equation, i.e., $D_F^T u_R$, may relate to a standard migration with cross-correlation imaging condition. One alternative is to use the deconvolution imaging condition when applying the adjoint modelling operator. This may not strictly be a least-squares problem that would pass the dot-product test, but in practice it may offer faster convergence. The deconvolution imaging condition would also be used for the 'adjoint' modelling operation on the righthand side:

$$D_F^{dec} u_R \approx D_F^{dec} D_F r.$$

An alternative formulation may involve evaluating the receiver side (up-going) wavefield, for example:

$$u \approx [D_F r]_F.$$

In this case, the up-going wavefield, u, may be located at the recording datum, and the reflecting wavefield ($D_F r$), for each depth in the image of the subsurface, is forward extrapolated to the surface and accumulated. An alternative way of writing this may be:

$$u \approx F D_F r,$$

where the linear operator F extrapolates the reflecting wavefield from each depth in the image of the subsurface and accumulates at the receiver positions. Constraints may be added to the problem: e.g., image domain sparseness weights or total variation regularization. Data domain confidence or sparseness weights may also be used, for example, to respect a mute function or to respect recorded data positions e.g., following [4].

The optimization problem may be solved with conjugate gradients, steepest descent, an inverse Hessian approach, or another solver. The first iteration of most optimized migrations may relate to a standard migration with an imaging condition. Non-linear optimized migration algorithms may also be used. Optimized migrations may be used for primary imaging, multiple imaging, or combined primary and multiple imaging as discussed elsewhere in this document.

Prior to imaging, the recorded data may be pre-processed. Pre-processing may involve noise attenuation (e.g., swell noise), guided wave attenuation, deblending, source signature compensation, source and/or receiver deghosting, wavefield separation, demulitple, data interpolation/regularization (for down-going and/or up-going wavefields), redatuming (e.g., to free surface) and other approaches known in the art. Deghosting and/or wavefield separation may be applied on the source side or receiver side.

The recorded data that is used for migration may be data recorded by any sensor type, examples include hydrophones, geophones, particle motion sensors, particle velocity sensors, accelerometers, near-field hydrophones, near-field accelerometers or other sensor configured to detect seismic energy. The data may be from towed streamer, ocean-bottom sensor, OBS, (node or cable) acquisition, land acquisition, transition zone campaign, or borehole (e.g., vertical seismic profile (VSP), distributed acoustic sensing (DAS)).

The data may be recorded at a constant datum, or a variable datum (e.g., variable depth streamer, or varying topography in land, e.g., floating datum). In the case of land data, the geophone recordings may be propagated forwards and backwards to form the multiple image, and the multiple image may be used to predict multiples. In general, the terms OBN (ocean bottom node), OBC (ocean bottom cable), OBS (ocean bottom survey/sensor), and PRM (permanent reservoir monitoring) systems may be used interchangeably. The recorded data may be input to multiple imaging before or after wavefield separation. OBN receiver gather data may correspond to hydrophone, geophone (x, or, y, or, z), accelerometer, receiver-upgoing, receiver-downgoing, etc.

Reflectivity, also known as an image of the subsurface, the migrated image, or the image, is represented by the letter "$r$" herein and describes how the down-going wavefield may change into the up-going wavefield.

Seismic sources are used to generate the seismic waves, whose energies are then recorded by the various sensors as seismic data. The seismic source may be any type of seismic source, examples include airgun, pinger, sparker, boomer, marine vibrator, land vibrator, dynamite, etc. The source may be a single source (e.g., single airgun) or an array of sources (e.g., airgun array).

A time dimension may be added to a seismic survey. A timelapse (also known as 4D) survey is performed in an area where it is necessary to monitor subsurface changes as a function of time. For this case, it may be necessary to repeat seismic acquisitions over the same geographical area. The different acquisitions are referred to herein as "vintages." It is possible to designate one of the vintages as a reference, or 'baseline', and the other vintages may be called 'monitor' datasets. Timelapse surveys may relate to monitoring of oil and gas reserves, or may also be used, for example, to monitor carbon-capture fields or stability of wind turbine farms after a storm.

To estimate the status of the seismic energy when moving from one location to another location in the subsurface, the concept of wavefield extrapolation, also known as wavefield propagation, is used. Seismic data extrapolation is a method to simulate recordings of a wavefield at a position other to which it was recorded. For example, for horizontal towed streamer acquisition, it is possible to record hydrophone measurements at a depth of 12 m. Then, it is possible to extrapolate these measurements to a new datum, for example, at 100 m depth. The extrapolation may use an estimate of the subsurface properties, e.g., velocity, anisotropy, absorption, etc. The extrapolation may be with one-way or two-way extrapolations and may be forward or reverse in direction.

As discussed above, it is possible to image the subsurface using only the primaries, only the multiples, or both the primaries and the multiples. To fully understand the benefits and advantages of the novel embodiments to be discussed herein, a short summary about primary and multiples imaging is now presented. Primary imaging using wavefield extrapolation involves deriving an image of the subsurface (also known as reflectivity), $r$, through the application of an imaging condition between a forward extrapolated source wavefield (down-going), $s$, and a reverse extrapolated primary wavefield (up-going), $p$. Figure 4 schematically illustrates the approach in which the image forms where the down-going source wavefield $S_F$ and the up-going primary wavefields $P_R$ constructively interfere in the subsurface 410 at the location 412. Note that in this example, both the source S and the receiver R are located at the earth surface 402. Also note that the available information is (1) information about the source, based on which the source wavefield is being determined, and (2) the information recorded at the receiver R. The source wavefield is down propagated to location 412, by a forward propagating operator, after which it is multiplied by the reflectivity $r$, while the recorded data is backward or reverse propagated from the receiver R to the location 412.

The image of the subsurface may be derived through an optimization scheme, for example, solving for r in the following equations:

$$r = \arg\min \|p_R - S_F r\|_2^2$$

where:

$S_F(t, x, y, z)$: is a source wavefield forward extrapolated into the subsurface. The use of capital-S relates to the fact the source wavefield is multiplied (convolved) by the image of the subsurface;
$r(x, y, z)$ : is the image of the subsurface;
$p_R(t, x, y, z)$ : is the primary wavefield reverse extrapolated into the subsurface;
$t$ is the recording time (seconds); and
$(x, y, z)$ refer to the cartesian coordinates.

The optimized migration attempts to find an optimal image of the subsurface, $r$, to model the known reverse extrapolated primary (up-going) data, $p_R$, which is illustrated in Table 1. This table indicates that the up-going primary arrivals are being generated in primary imaging.

Table 1

| Down-going | Reflectivity | Up-going |
|---|---|---|
| Source wavefield | → | Primary wavefield |

The primary wavefield may be raw data, after denoise (e.g., swell noise attenuation, demultiple), or after wavefield separation (e.g., PZ summation or deghosting). It may be provided to the algorithm at the surface datum, or another datum (e.g., ocean bottom survey data, or after re-datuming, for example, to free surface). If an extended image is used, it will be necessary to modify the modelling operator, $S_F$, accordingly. The datasets and operators may alternatively be expressed in the temporal frequency domain.

The primaries may be modelled, i.e., it is possible to estimate primaries in the space-time domain using an image $r$ of the subsurface, as illustrated by the following equation:

$$p = [S_F r]_F.$$

In this case the forward extrapolated source wavefield, $S_F$, reflects from the image $r$ of the subsurface to generate a reflecting wavefield, $S_F r$. The reflecting wavefield is subsequently extrapolated forward to the primary, $p$, recording positions via the forward extrapolation operator (*subscript F*).

As with primary imaging, the aim of multiple imaging is also to derive an image of the subsurface but this time based on the multiples $M$ and not the primaries $P$. In the case of multiple imaging, the down-going data utilizes the receivers R as secondary sources, thus significantly increasing the illumination from the surface compared to the primary imaging. Multiple imaging may involve a single iteration with an imaging condition or plural iterations to solve an optimized migration problem, for example, by solving the following equation for $r$.

$$r = \arg\min \|u_R - D_F r\|_2^2$$

where

$D_F(t, x, y, z)$ : is a forward extrapolated down-going data, before demultiple, utilizing all receivers R as secondary sources. Ideally this data should contain primaries and multiples. It may optionally include direct arrival data. The use of capital-D relates to the fact that the down-going wavefield is multiplied (convolved) by the image of the subsurface; and

$u_R(t, x, y, z)$ : is an up-going wavefield, reverse extrapolated into the subsurface. Ideally this wavefield should contain only free-surface multiples. In practice, this may not be available, in which case an up-going wavefield containing primaries and multiples may be used.

Figure 5 schematically illustrates how an image forms where down-going $d_F$ and up-going $u_R$ wavefields coincide in the subsurface 410 at the location 412. The rays are shown for a forward extrapolated primary arrival, $d_F$, turning into a first order multiple, $u_R$. Note that each receiver (for example R1) acts as a new source of illumination of the subsurface. This approach also illuminates the subsurface 410 where other multiple orders constructively interfere in the subsurface, as schematically illustrated in Table 2.

Table 2

| Down-going | Reflectivity | Up-going |
|---|---|---|
| Primary wavefield | → | First order multiples wavefield |
| First order multiples wavefield | → | Second order multiples wavefield |
| Second order multiples wavefield | → | Third order multiples wavefield |
| Third order multiples wavefield | → | Fourth order multiples wavefield |
| Etc. | | |

It also possible to use a multiple imaging approach using down-going and up-going datasets derived from dual-sensor towed streamer recordings [6]. In general, this approach may use any recorded data type, which may optionally have undergone pre-processing. Up-going and down-going wavefields may correspond to data after wavefield separation. It is also possible to use an up-going wavefield, before or after redatum to the free-surface, for up-going and down-going wavefields. Alternatively, it is possible to directly use the recorded data before wavefield separation for up-going and down-going wavefields. Single iteration or optimized migrations may be used. Multiple imaging may result in causal and anti-causal cross-talk.

A third possible imaging approach is to combine the imaging of primaries and multiples. The combination of primary and multiple imaging may involve introducing a source wavefield (or direct-arrival) to the down-going wavefield of the multiple imaging equations, as follows:

$$r = \arg\min\|p_R + u_R - (S_F + D_F)r\|_2^2.$$

In this case, both the primary and multiple arrivals will be used in the imaging, as illustrated in Table 3. In the above equation:

$p_R$ is the reverse extrapolated up-going primary arrivals;
$u_R$ is the reverse extrapolated up-going multiples; In general, $p_R + u_R$ may relate to the recorded data, including both primaries and multiples;
$S_F$ is the forward extrapolated source-wavefield; and
$D_F$ is the forward extrapolated down-going wavefield including primaries and multiples.

Table 3

| Down-going | Reflectivity | Up-going |
|---|---|---|
| Source wavefield | → | Primary wavefield |
| Primary wavefield | → | First order multiples wavefield |
| First order multiples wavefield | → | Second order multiples wavefield |
| Second order multiples wavefield | → | Third order multiples wavefield |
| Third order multiples wavefield | → | Fourth order multiples wavefield |
| Etc. | | |

This may improve the signal-to-noise ratio of the resulting image of the subsurface and reduce cross-talk (especially anti-causal cross-talk, as any primaries in the up-going wavefield will now be modelled from the source). The image of the subsurface may be formed directly using an imaging condition, but more commonly an optimized migration scheme may be used.

While in theory this approach is attractive, in practice issues such as accurate knowledge of the source wavelet, illumination limitations of the primary wavefield, and balancing multiple and primary imaging contributions can cause problems. For these, as well as other reasons, some authors modify the optimization equations given above to include regularization constraints; e.g. total variation regularization or Tikhonov regularization.

With application to OBN downgoing data, it is possible to forward extrapolate downgoing data that includes the direct arrival (water-wave) and reverse propagate downgoing data after direct arrival attenuation. In general, this approach may use any recorded data type, which may have undergone pre-processing. Up-going and down-going wavefields may correspond to data after wavefield separation. It is also possible to use an up-going wavefield before or after redatum to the free-surface. Alternatively, it is possible to directly use the recorded data before wavefield separation. Single iteration or optimized migrations may be used. An alternative is to combine primary imaging with multiple imaging post migration.

Cross-talk is a well-documented side-effect of multiple imaging, being exhibited by spurious events in the image of the subsurface with a similar appearance to multiples [7]. Causal cross-talk occurs whenever reverse extrapolated up-going multiple energy is extrapolated beyond its actual reflection point and interacts with the extrapolated down-going wavefield. With anti-causal cross-talk, this effect occurs before its actual reflection point. Some imaging conditions have been documented to behave differently than others in reducing cross-talk effects. The deconvolution imaging condition has been well documented to reduce cross-talk relative to the cross-correlation imaging condition. The 2D deconvolution imaging condition of Valenciano and Biondi [8] has been shown to further reduce cross-talk by deconvolving plane waves across several shots. The multi-dimensional imaging condition solves a least squares problem at each depth level.

Others describe ways of estimating causal and anti-causal cross-talk in the image domain [7]. Causal cross-talk may be estimated by migrating a down-going source wavelet, with an up-going multiples wavefield. Anti-causal cross-talk may be estimated through migration of the down-going recorded data with up-going primaries. Simple approaches to estimate a cross-talk image corresponding to water-bottom contamination may involve shifting the image of the subsurface down to the depth of the cross-talk, and adaptively subtracting.

The input data used for all these methods is now discussed. For towed streamer applications, it is typical to image receiver side multiples in the shot domain. Ideally the input data for multiple imaging should relate to receiver side down-going and up-going wavefields. In the case that noise free dual-sensor streamers are used, these wavefields can be conveniently derived using PZ-summation and PZ-subtraction. In the case particle velocity data is not available, or at temporal frequencies where it is too noisy to be used, wavefield separation may be a function of hydrophone only measurements. Hydrophone only approaches typically require knowledge of the receiver depth and the free-surface datum (e.g., either horizontal or variable datum). When this is the case, it is possible to perform multiple imaging with hydrophone-only data, or with incomplete (noisy) dual- or multi-sensor data. The approach may involve, for hydrophone only wavefield separation for multiple imaging, (1) receiving hydrophone data following a source excitation, (2) receiving the hydrophone recording positions in space, (3) receiving a free-surface datum definition above the receivers (for example, a horizontal datum, or varying with wave-height), (4) using the hydrophone data, the free-surface datum definition, and the hydrophone positions to estimate down-going and up-going wavefields, (5) forward extrapolating the down-going wavefield to generate a forward extrapolated down-going wavefield, (6) reverse extrapolating the up-going wavefield to generate a reverse extrapolated up-going wavefield, and (7) generating an image of the subsurface using the forward extrapolated down-going wavefield and the reverse extrapolated up-going wavefield.

In other applications, it is possible to migrate source-side multiples $M_S$ in the receiver domain, for example, ocean bottom sensor or land data. In these cases, it is possible to estimate down-going and up-going wavefields leaving the sources and use these as input to multiple imaging. This approach may be summarized as follows: (1) receiving recordings at a sensor recording signals from a plurality of source excitations, (2) receiving the source excitation positions in space, (3) receiving a free-surface datum definition above the sources (for example, a horizontal datum, or varying with wave-height), (4) using the sensor recordings, the source excitation positions and the free-surface datum definition to estimate source-side down-going and up-going wavefields, (5) forward propagating the source-side down-going wavefield to generate a forward extrapolated source-side down-going wavefield, (6) reverse propagating the source-side up-going wavefield to generate a reverse extrapolated source-side up-going wavefield, and (7) forming an image of the subsurface using multiples in the forward extrapolated source-side down-going wavefield and the reverse extrapolated source-side up-going wavefield. In either source or receiver side applications, especially with constant source or streamer depths, the data may be used for multiple imaging without wavefield separation or deghosting. In this case, the recordings (e.g., hydrophone, accelerometer, geophone, etc.) may be used directly for the forward and reverse extrapolation operations.

As described in [4], it is possible to use a re-datumed up-going wavefield for both forward and reverse extrapolations with the following flow: (1) receiving recordings at a sensor following a source excitation, (2) calculating an up-going wavefield using the sensor recording, (3) redatuming the up-going wavefield to the free-surface, (4) forward propagating the re-datumed up-going wavefield, (5) reverse propagating the re-datumed up-going wavefield, and (6) forming an image of the subsurface using the forward extrapolated re-datumed up-going wavefield and the reverse extrapolated re-datumed up-going wavefield. In one application, it is possible that the re-datumed down-going data is interpolated and regularized before forward extrapolation, and/or the re-datumed up-going data is interpolated and regularized before reverse extrapolation, and/or the re-datumed up-going data is interpolated and regularized before forward extrapolation and before reverse extrapolation, and/or the recordings are hydrophone recordings, and/or the recordings are particle motion recordings (e.g., accelerometer, particle velocity, geophone), and/or the recordings are hydrophone and particle motion recordings.

When migrating primaries, the down-going wavefield propagates from the source position and is defined continuously at every bin position. The up-going wavefield, on the other hand, is sampled discretely at the sensor positions, which are generally irregularly sampled (for example, due to cable feather) and aliased (due to cable spacing). With primary migration, the image will form when the primary arrival constructively interferes with the continuously defined down-going source wavefield. This will constructively and destructively interfere with contributions from other sensors and shots in the migration summation.

Multiple imaging uses recorded data for both up-going and down-going wavefields. In addition, the image forms at many times down the trace, namely whenever a down-going arrival constructively interferes with a following up-going multiple order. Multiple imaging without interpolation typically results in a heavy level of noise due to both down-going and up-going wavefields being irregularly sampled and aliased. It is known in the art a method whereby recorded pressure and vertical velocity data are separated into up-going and down-going pressure data, the up-going and down-going pressure data are interpolated and regularized, and the interpolated and regularized data is used to generate a seismic image.

In some embodiments, wavefield separation can work better if the vertical particle velocity data is corrected with an obliquity correction. An obliquity correction relates to an angular dependent scaling of particle velocity/motion data based on the arrival angle of a seismic event to the sensor orientation. In some embodiments, this correction may be made by transforming the input data to a second domain (e.g., tau-p or FK domain), scaling the data, and reverse transforming the data. The transform to a second domain will be more accurate in the case of de-aliased and regularized data.

As such, in one embodiment, the following approach is taken: (1) receive vertical particle velocity data, (2) interpolate and regularize the vertical particle velocity data to generate interpolated and regularized vertical particle velocity data, (3) apply an obliquity correction to the interpolated and regularized vertical particle velocity data to generate obliquity corrected interpolated and regularized vertical particle velocity data, (4) receive hydrophone data, (5) interpolate and regularize the hydrophone data to generate interpolated and regularized hydrophone data, (6) generate wavefield separated data using the obliquity corrected interpolated and regularized vertical particle velocity data and the interpolated and regularized hydrophone data, and (7) use multiples in the wavefield separated data for multiple imaging. These methods may be generalized to any sensor type and any seismic source type. This may be for any of the multiple migration or full wavefield migration methods discussed in this document for source or receiver domain.

With this background, a novel multiple attenuation based jointly on a source-side targeted multiple model Ms and a receiver-side multiple model $M_R$ from wave-equation deconvolution is now discussed. Source and receiver side short-period surface-related multiples can have different timings and amplitudes. The term "short-period" is defined herein as being a relative term that compares (a) a time associated with a primary to reach a receiver R, after being emitted by a source S, with (b) a time associated with a multiple between the source S and receiver R. When this ratio is large, i.e., over 2, the surface-related multiples are considered to be short-period.

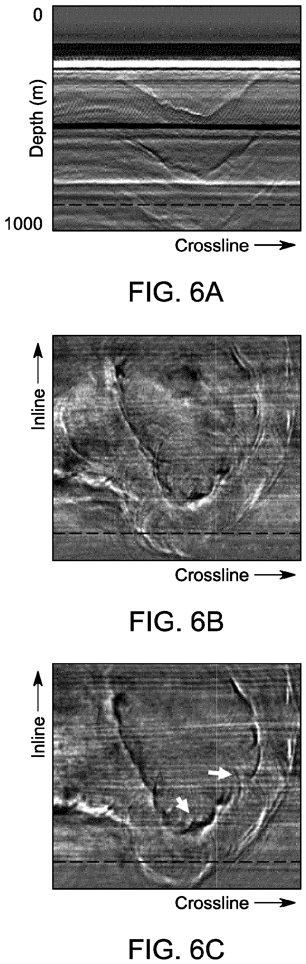

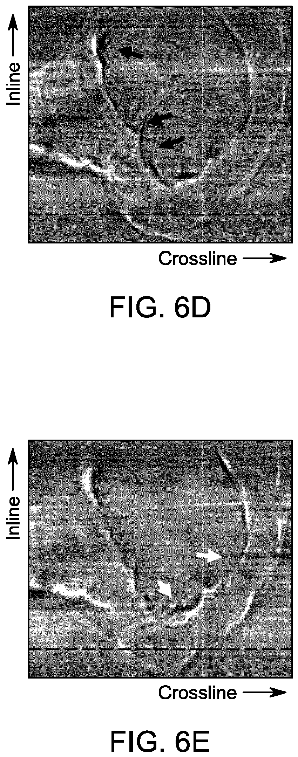

These variations are typically dependant on the variability in depth of the multiple generator, or when the primary is not horizontal, such that a signal propagating down to the primary comes back to the receiver at a different propagation angle. Figures 6A to 6E show multiples generated below a complex basaltic sill feature. In this case, the receiver-side and source-side multiples relate to a complex array of diffracted arrivals, as illustrated in Figures 6A and 6B, respectively. One standard tool for Surface Related Multiple Elimination (SRME, Berkhout and Verschuur, 1997) involves a convolution between the recorded data and an estimate of the primary energy (i.e., the multiple generators; often the data is substituted for the estimate of primary energy). In shallow water settings, such as in this embodiment, the short period multiple generators have often not been sufficiently well recorded (i.e., there are not enough recordings with short enough offsets), and as such the SRME method breaks down. In this case, it is possible to turn to targeted multiple models [3 or 5], which use an interpretation of the main multiple generator as a substitute for the primary estimate. Figures 6C and 6D show targeted multiple estimates for source and receiver side multiples, respectively. A difference in the character of the receiver-side (Figure 6C) and source-side (Figure 6D) multiple predictions can be seen as highlighted by the black and white arrows, respectively. Figure 6E shows an alternative multiple estimate based on wave-equation deconvolution as introduced in [4]. Wave-equation deconvolution is a 'deconvolution-like' approach that derives an image of the subsurface, which when used to predict multiples following [2], is optimal. Wave-equation deconvolution may be based on an optimized migration (e.g., solving a least-squares cost function) or may be based on a deconvolution imaging condition. Note that the receiver-side estimate, either from targeted multiple prediction or wave-equation deconvolution, has a similar character.

While the receiver-side multiple estimates shown in Figures 6C and 6E have similarities, the advantage of the estimates in Figure 6E is that it predicts multiples from more than one multiple generator (see description in [4]). As mentioned previously, SRME has difficulty in predicting short period multiples as the minimum offset in towed streamer campaigns is not typically short enough to record the shallow reflections at small enough reflection angles.

The multiple prediction method of SRME (Berkhout and Verschuur, 1997) predicts the multiples by convolving data with the primaries. For a zero-offset 1D trace, all reflections included in the primary trace will convolve with all arrivals in the data and result in a following order of reflection being modelled. These following orders of reflection are known as multiples, which may be subtracted from the input data in a seismic data processing step called demultiple. In higher dimensions, this would involve a series of convolutions over a spatial aperture called a multiple-contribution gather, following which the resulting trace-by-trace convolution results may be summed. The spatial aperture may be in one spatial direction (for 2D data; (x,t)) or two spatial directions (for 3D data; (x,y,t)).

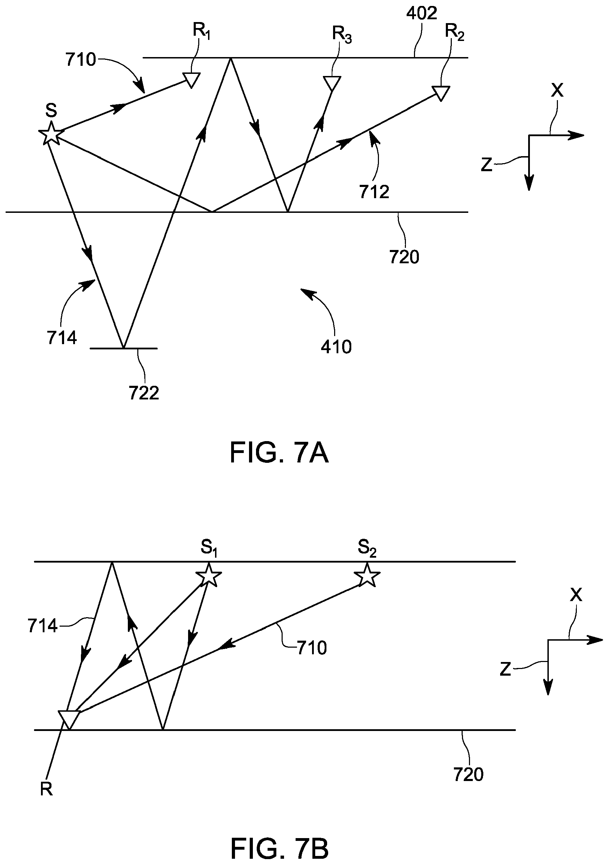

In the case primaries have not been recorded, for example because the minimum offset is beyond or close to the critical reflection angle, some of the methods discussed above fail to provide a good quality image. To solve this problem, a novel embodiment jointly uses (1) a source-side targeted multiple model $M_S$, and (2) a receiver-side multiple model $M_R$ from wave-equation deconvolution, to attenuate the multiples that are recorded by the receivers. This method is now discussed in more detail. Note that the receiver-side multiple model $M_R$ relies on the shot domain, i.e., those traces recorded by the receivers due to a single excitation from a source, and those traces include direct arrivals, primaries, and multiples, as schematically illustrated in Figure 7A. Figure 7A shows a direct arrival 710 being recorded by receiver R1, a primary 712 being recorded by receiver R2, and a multiple being recorded by receiver R3. Note the water bottom 720, and a reflector 722 (multiple generator) located within the subsurface 410. The source-side multiple model Ms relies on the receiver domain, i.e., all the shots received by a single receiver as schematically illustrated in Figure 7B, which shows a single receiver R recording plural seismic waves coming from different sources S1, S2.

Source and receiver side short-period surface-related multiples (illustrated in Figures 2A and 2B) can have different timings and amplitudes. These variations are typically dependant on the variability in depth of the multiple generator (e.g., surface 722 in Figure 7A) or when the primary is not horizontal, such that signal propagating down to the primary comes back to the receiver at a different propagation angle.

If the primaries are missing due to the shallow water settings, the traditional SRME approach breaks down as an estimate of the primaries is used. Thus, [3] solves this problem by using a source-side targeted multiple model $M_S$, which for the case that the water bottom reflection is a strong multiple generator, estimates a Green's function of the water bottom reflection based on knowledge of the water-bottom depth, the velocity of sound in water, and the source and receiver positions. Using ray tracing or Pythagoras travel-time estimation based on the source-receiver geometry, it is then possible to simulate a spike arrival at the time of the anticipated water-bottom primary arrival and convolve this with the recorded data. In 1D, such a convolution would relate to a temporal shift of the recorded data by the timing of the spike. 2D or 3D multiple-contribution gather apertures, as described above in the context of SRME, may also be used. This allows the source-side targeted multiple model $M_S$ approach to be used for non-zero-offset data, non-horizontal multiple generators, and varying velocity fields. The substitution of a primary arrival is responsible for the generation of multiples.

More specifically, [3] assumes that the multiple $M$ can be obtained by convolving the recorded data $D$ with the primary reflections $P$ followed by a source deconvolution (see [1]):

$$M = D \otimes P \div S.$$

In this equation, the primaries $P$ and the source $S$ are unknown. The source-side targeted multiple model $M_S$ replaces the term $P \div S$ in the above equation with a modelled Greens function as follows:

$$G(s, r; \omega) = \int_{\Gamma(x)} G(s, x; \omega) R(s, x, r) G(x, r; \omega) dx$$

where $s$ and $r$ are the source and receiver locations, respectively, $\Gamma(x)$ is the predefined water bottom, $R(s, x, r)$ represents the reflectivity at the location $x$ corresponding to the source and receiver pair $(s, r)$. The Greens function can be calculated using Wave Equation Modelling (WEM) as discussed in [2] or [5] or can be a Kirchhoff demigration of the multiple-generating horizon. The multiple $M$ can then be obtained as follows:

$$M(s, r; \omega) = \int D(s, r'; \omega) G(r', r; \omega) dr'.$$

This approach removes the cross-talk between multiples and does not suffer from spectral distortion caused by the extra source wavelet.

An alternative approach to convolution driven modelling of multiples is to use wave-equation extrapolation approaches. This approach may use shot-domain propagations to predict receiver-side multiples, or receiver-domain propagations to predict source-side multiples. As an example in the shot domain, and given a subsurface reflectivity estimate r(x,y,z), [2] describes an approach whereby recordings over a range of receivers may be forward extrapolated into the earth. Using an estimate of the velocity of sound in the subsurface, the extrapolation estimates recordings which would have made if the wavefield had continued its propagation forwards into the earth. The forward extrapolated data may be multiplied by the subsurface reflectivity, and this reflecting wavefield may be further forward extrapolated to the free surface. Typically, one-way extrapolation approaches may be used, where data extrapolated to a depth in the subsurface may be simulated with knowledge of the sub-surface velocities. This approach may involve forward extrapolation of data recorded at receivers from a single shot-point (shot-domain). Alternatively, based on the reciprocity theorem, whereby the shot and receiver positions may be interchanged, data generated by a number of shotpoints and recorded by, or simulated at, a single receiver location may be forward extrapolated into the subsurface (receiver-domain). In the case a receiver location is simulated, it may relate to a selection of towed streamer channel positions at a surface-consistent location.

More specifically, the receiver-side multiple model $M_R$ assumes that the migrated data is a reliable representation of the actual surface reflectivity. This model, similar to the SRME model, assumes the following relationship between the primaries and multiples:

$$D = (I - s^{-1} * P)^{-1} * P,$$

where $D$ is the data and $P$ the primaries, and thus, the multiples $M$ are given by $D - P$. The symbol * stands here for a multidimensional surface-consistent convolution operator and $s^{-1}$ is the inverse wavelet. This expression can be expanded using a Neumann series to be:

$$D = \left[\sum_{n=0}^{\infty} (s^{-1}P)^n\right] P$$

and then developed to become:

$$D = P + (s^{-1} * P)^1 * P + (s^{-1} * P)^2 * P + \cdots$$

$$= P + \qquad M_1 + \qquad M_2 + \cdots$$

$$= P + \text{receiver} - \text{side multiple model}$$

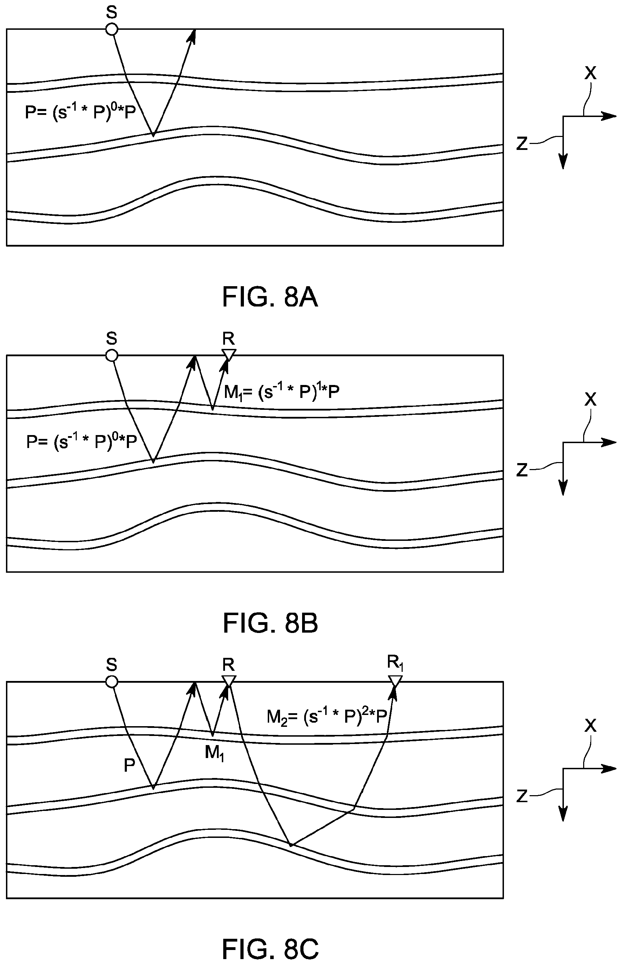

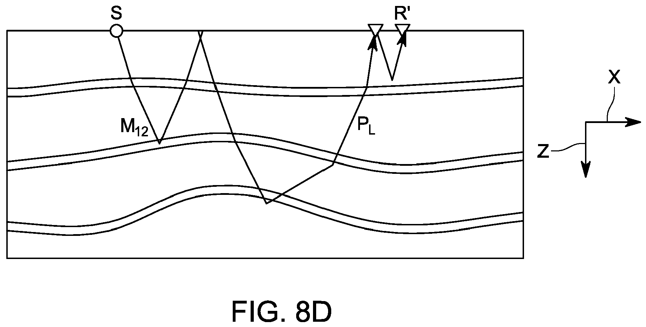

Each term in the series above describes an operation of the receiver-side multiple model $M_R$; from primaries, generated or recorded, one or more iterations are applied to the previous result with a primaries generator tool, to obtain the various orders of multiples. In other words, while the SRME model provides all orders of multiple with the right kinematics, the receiver-side multiple model $M_R$ generates in a first iteration the primaries $P$, in a second iteration the first-order multiples $M_1$, and so on, as illustrated in Figures 8A to 8D, which corresponds to Figures 1A to 1D of [2]. In other words, the receiver-side multiple model $M_R$ generates a next order multiple at each iteration.

For the case when the reflectivity for the wave-equation multiple modelling approach discussed above is not known, it may be represented by a spikey horizon at the depth of a primary event that is substantially responsible for generating multiples. This targeted wave-equation multiple prediction approach was described in [5].

The approach of [5] overcomes the case where the reflectivity is not known, but is typically targeted for just one multiple generator. In the case the multiple generators of interest are not fully known, it is possible to invert for an optimal reflectivity responsible for changing the data into multiples. This approach has some similarities with deconvolution, but in this case the prediction operator is expressed as a reflectivity image in the depth domain rather than a convolutional filter in the space-time domain.

The approach of [4], called herein "multiple periodicity method," involves solving the linear operations of the multiple modelling approach of [2] for the optimal reflectivity, i.e., solving:

$$m(t, x, y) = F^{-1}\Phi(f, x, y, z)D_\Phi(f, x, y, z)r(x, y, z).$$

In this equation:

$r(x, y, z)$ is the earth reflectivity;
$D_\Phi(f, x, y, z)$ is the forward extrapolated down-going wavefield expressed as a convolution operator that is applied to the reflectivity. The convolution of this operator with the earth reflectivity results in a reflecting wavefield;
$\Phi(f, x, y, z)$ is the forward extrapolation operator to be applied to the reflecting wavefield;
$F^{-1}$ is the reverse Fourier transform in the time domain; and
$m(t, x, y)$ are the recorded multiples in a space-time domain. Thus, the multiple periodicity method essentially forward extrapolates a down-going field, convolutes this field with a reflectivity which results in a reflecting wavefield, forward extrapolates the reflecting wavefield, and reverse Fourier transforms the result to the time domain.

As the multiples, $m$, will not typically be known, the data itself may be used as a substitution. A minimum image depth will prevent the trivial solution of a spike at zero-depth, similar to a predictive deconvolution gap. Sparseness weights may be added to the equation to insist on the reflectivity having a sharp response at the depth of a known reflection, for example the water bottom.

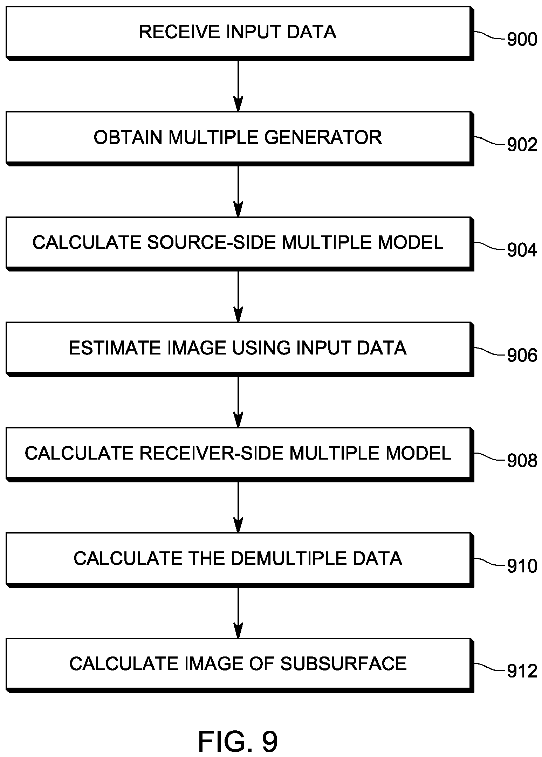

The source-side targeted multiple model $M_S$ and the receiver-side wave-equation deconvolution multiple model $M_R$ discussed above are now used to jointly attenuate the multiples. According to this embodiment, which is schematically illustrated in Figure 9, the novel method receives in step 900 the input data $D$ for a plurality of shots and a plurality of receivers R which contain a surface related multiple content $M=M_S+M_R$, where the input data $D$ is in a space-time domain following excitation of a seismic source S. In step 902, the method obtains (e.g., receives or calculates) an interpretation of a multiple generator, i.e., a position in the subsurface of the surface that generates the multiple (see, for example, surface 722 in Figure 7A). In step 904, a source-side targeted multiple model $M_S$ is generated, as discussed above with regard to Figure 7B. The source-side targeted multiple model $M_S$ is calculated based on the input data $D$ and the interpretation of the multiple generator 720. Shot and receiver positions required for convolutions within the multiple contribution gather that have not been recorded may be generated by spatial interpolation and extrapolation.

In step 906, the method then estimates an image $r_e$ of the multiple generators 722 based on the multiple periodicity approach, i.e., using the image generated based on multiple periodicity method discussed above. This step uses the input data for calculating the image. In step 908, the method generates the receiver-side multiple model $M_R$ (see method discussed above with regard to Figures 8A to 8D) using a wavefield propagation of the input data $D$ and the image $r_e$ of the multiple generators.

Once the source-side multiple model $M_S$ and receiver-side multiple model $M_R$ are estimated, the method generates in step 910 the multiple attenuated data, i.e., calculates the demultiple data $DD,$ which includes subtracting the source-side multiple model $M_S$ and the receiver-side multiple model $M_R$ from the input data D. The subtraction may relate a straight subtraction or an adaptive subtraction. The demultiple data $DD$ may then be used to generate a final image $r$ of the subsurface. Note that the terms "multiple model" and "multiple estimate" are used interchangeably in these embodiments. Having the demultiple data $DD,$ it is possible to calculate an improved image (reflectivity) of the surveyed subsurface as this data more accurately represents the subsurface. Note that the multiples are in a sense spurious energy reflections from the free water surface. The demultiple attenuation method discussed with regard to Figure 9 also replaces several steps in conventional processing, i.e., encompassing tau-p predictive deconvolution and Radon demultiple. These steps are computationally intensive and thus, the present demultiple attenuation makes these steps redundant and improves the efficiency of the computing system that runs such method.

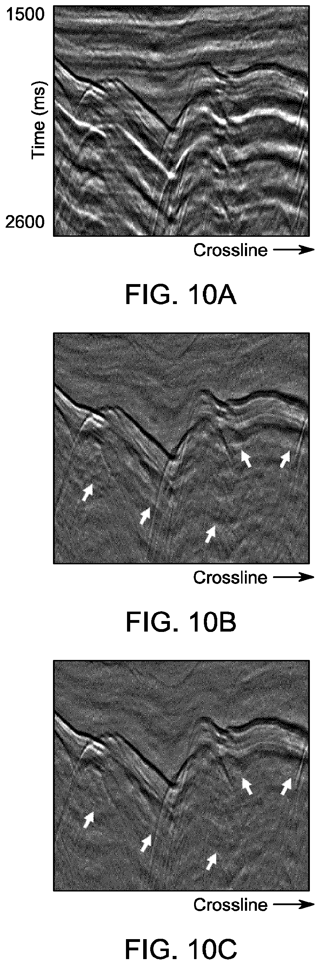

To test the capabilities of this method, the following experiments have been performed. A set of raw seismic data has been processed without any demultiple algorithm, and the image shown in Figure 10A has been obtained. When the same raw seismic data has been processed using a targeted demultiple approach, which is known in the art, the image shown in Figure 10B has been obtained. The same data has been also processed with the novel demultiple jointly using multiple models from wave-equation deconvolution and a source-side targeted multiple prediction method, i.e., the method of Figure 9. The obtained image is shown in Figure 10C. A reduction in the level of residual multiple may be seen on the joint approach in Figure 10C, as highlighted by the arrows.

The method of Figure 9 may be implemented with any of the following conditions or variations. The input data $D$ may be the result of any seismic acquisition type, e.g., towed-streamer, ocean bottom sensor, land, nearfield hydrophone, transition zone data, or VSP. The seismic source corresponding to the acquisition may be impulsive (e.g., airgun or dynamite) or non-impulsive (e.g., vibrator or non-synchronized airgun firing). The receivers corresponding to the acquisition may be hydrophones, geophones, accelerometers, near-field hydrophones, DAS, etc. The image of the subsurface may be used to identify/interpret/exploit a sub-surface resource, such as, but not limited to, oil and gas, geothermal, mineral reserves, etc.

In one application, the interpretation of a multiple generator in step 902 may relate to a horizon interpretation in a space-depth domain, or to a horizon interpretation in a space-time domain. The source-side targeted multiple model may relate to the method described in [3], or alternatively, to a method described in [5]. The step 906 of estimating an image of the multiple generators involves, in one application, a correlation or deconvolution between a forward-propagated and a reverse-propagated wavefield. In another application, this step involves a deconvolution imaging condition, for example following [6]. Note that the methods described in [2] to [6] are so well known in the art that one skilled in the art would know, when reading the method in Pica, or the method in Wang, or the method in Poole, or the method Wiggins, or the method in Whitmore, the exact steps to be performed to achieve the results of that method. For this reason, there are instances in this document where the method of an "author" is used. The step 906 of estimating an image of the multiple generators may involve a least squares migration, e.g., the method of [4]. This may or may not involve sparseness. The step 908 of generating a receiver-side multiple model may follow the method of [2]. The step 910 of attenuating may involve an adaptive subtraction.

In one embodiment, which may be combined with other embodiments discussed herein, a second-order multiple model is derived, and the second-order multiple order model is subtracted as well as the source-side and receiver-side multiple models from the input data in step 910. The second-order multiple model, for example, may include two multiple predictions applied one after another as follows:

- Source-side targeted multiple prediction followed by receiver-side targeted multiple prediction;
- Receiver-side targeted multiple prediction followed by source-side targeted multiple prediction;
- Source-side targeted multiple prediction followed by receiver-side wave-equation prediction;
- Source-side targeted multiple prediction followed by receiver-side SRME prediction;
- Other combinations of known multiple prediction methods.

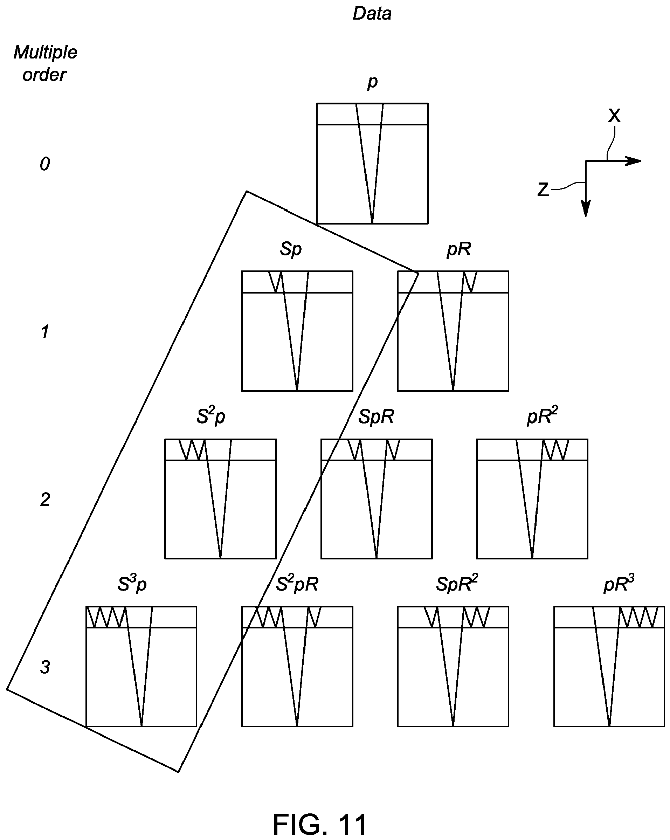

In yet another embodiment, which may be combined with other embodiments discussed herein, it is possible that the pure source-side multiples (highlighted by the rectangle in Figure 11) are attenuated from the input data prior to the step 906 of estimating an image of the multiple generators. This process may involve: generating a receiver-side targeted multiple model; generating a source-side targeted multiple model; generating recursive source-side and receiver-side targeted multiple models (either source-followed-by-receiver, or receiver-followed-by-source); and subtracting scaled versions of the above multiple models to attenuate the pure source-side peg-leg multiples only. This embodiment may involve a calibration of the multiple models to the input data. In yet another variation, pure-source side multiples are attenuated from the seismic data to generate pure-source side attenuated multiples data, and the pure-source side attenuated multiples data is used in the multiple periodicity method discussed above with regard to [4]. According to this variation, a source-side multiple model is subtracted from the seismic data followed by the addition of mixed-side multiples (i.e., multiples due to both the source and receiver sides) to create the pure-source side attenuated multiples data.

It is then possible to derive a wave-equation deconvolution reflectivity to predict data with attenuated pure source-side multiples from input data including all multiples. This approach may then have better amplitude prediction of the multiples and less cross-talk in the reflectivity. For clarity, standard wave-equation deconvolution may involve a forward propagation of the input data, and a reverse propagation of the input data. The modified approach may involve a forward propagation of the input data and a reverse propagation of pure source-side multiple attenuated data. In this regard, for the equation from [4]

$$m(t,x,y) = F^{-1}\Phi(f,x,y,z)D_\Phi(f,x,y,z)r(x,y,z)$$

both the input data D and the multiples m may use the input data. However, for the modified wave-equation deconvolution, $D$ may relate to the input data with all multiples, and m may relate to data after attenuating pure source-only peg-leg multiples. Once the image has been found, it may be used to model multiples using [2] and subsequently attenuate multiples from either the original input data or the data after attenuating pure source-only peg-leg multiples.

The method illustrated in Figure 9 is just one novel method for improved demultiple-based imaging. Other methods are now discussed that use the estimated multiples for imaging. One of these methods is called herein "multiple imaging using shot-domain and receiver-domain datasets." This method is based on the finding that an optimal solution for r is based on the following equation:

$$\begin{pmatrix} h_{u,R} \\ c_{u,R} \end{pmatrix} \approx \begin{pmatrix} H_{d,F} \\ C_{d,F} \end{pmatrix} r,$$

where

$H_{d,F}$ is down-going shot-domain data forward extrapolated into the subsurface. The upper-case matrix notation relates to the fact that this data will multiple/convolve; $C_{d,F}$ is down-going receiver-domain data forward extrapolated into the subsurface. The upper-case matrix notation relates to the fact that this data will multiple/convolve;

$h_{u,R}$ is up-going shot-domain data reverse extrapolated into the subsurface.

$c_{u,R}$ is up-going receiver-domain data reverse extrapolated into the subsurface.

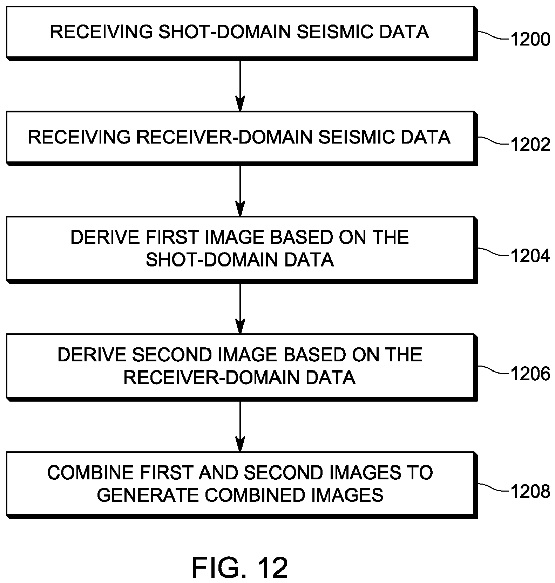

According to this method, as illustrated in Figure 12, there is a step 1200 of receiving a first shot-domain dataset $D_1$ corresponding to a source excitation recorded by a plurality of receivers R, a step 1202 of receiving a second receiver-domain dataset $D_2$ corresponding to a fixed receiver location recording signals following a plurality of source excitations, a step 1204 of deriving a first image $r_1$ of the subsurface using the first shot-domain dataset $D_1$, based on the factors $H_{d,F}$ and $h_{u,R}$ and their relationship noted in the equation above, a step 1206 of deriving a second image $r_2$ of the subsurface using the second receiver-domain dataset $D_2$, based on the factors $C_{d,F}$ and $c_{u,R}$ and their relationship noted in the equation above, and a step 1208 of combining the first image $r_1$ of the subsurface and the second image $r_2$ of the subsurface to generate a combined image $r$ of the subsurface.

For this method, the first and second datasets may include only primary arrivals, or both primary and multiple arrivals, or only multiple arrivals. The step 1208 of generating a combined image of the subsurface involves primary imaging of the first and second datasets, or multiple imaging of the first and second datasets, or joint imaging of primary and multiple arrivals in the first and second datasets. In one application, the step 1208 includes summing together the image from step 1204 and the image from step 1206.

The combined image of the subsurface may be later used in an optimized imaging approach to generate a combined optimized image of the sub-surface. In one application, the combined image of the subsurface defines a starting residual in a combined optimized imaging of the subsurface. In another application, the combined image of the subsurface defines a starting guess to the combined optimized image of the subsurface.

The first dataset may include a down-going first dataset and an up-going first dataset, where the down-going first dataset is forward extrapolated into the subsurface to generate a down-going forward extrapolated first dataset and the up-going first dataset is reverse extrapolated into the subsurface to generate an up-going reverse extrapolated first dataset. The down-going forward extrapolated first dataset and the up-going reverse extrapolated first dataset are used to calculate the first image of the subsurface. An imaging condition is used to calculate the first image of the subsurface, e.g., the last equation discussed herein.

The second dataset may include a down-going second dataset and an up-going second dataset. The down-going second dataset is forward extrapolated into the subsurface to generate a down-going forward extrapolated second dataset and the up-going second dataset is reverse extrapolated into the subsurface to generate an up-going reverse extrapolated second dataset. The down-going forward extrapolated second dataset and the up-going reverse extrapolated second dataset are used to calculate the second image of the subsurface. The same imaging condition as for the first dataset or a different one may be used to calculate the second image of the subsurface.

In one application, a velocity model of the subsurface is received, and the velocity model is used to extrapolate the datasets. In this or another application, the plurality of receivers corresponding to the first dataset are towed behind a vessel or the plurality of receivers are on the seabed (OBN or OBC) or the receivers are disposed in a wellbore (VSP). The fixed receiver location corresponding to the second dataset is recorded by a towed streamer or located on the seabed (OBN or OBC) or located in the wellbore (VSP). The fixed receiver location corresponding to the second dataset may be recorded by a towed streamer and corresponds to a surface consistent position based on different recording channels from different shots. In one application, the first dataset is recorded by a towed streamer and the second dataset is recorded by a sensor positioned on the seabed. Other combinations are possible, e.g., land data and VSP data.

The migration used in the method may be an optimized migration, i.e., a least-squares migration, for example following [4]. The optimized migration may be performed using an iterative solver, e.g., steepest descent or conjugate gradients. The optimized migration may involve minimizing a cost-function that is a combination of the first and second datasets. A cost-function used with the migration may be in the image domain, or the data domain. The input data may be after pre-processing.

The up-going and down-going datasets discussed above relate to receiver-side primary and ghost arrivals, or to source-side primary and ghost arrivals. In one application, an up-going dataset is used for up-going and down-going datasets. The up-going dataset may be extrapolated to the free-surface and used for up-going and down-going datasets. When the least-squares multiple imaging using towed-streamer data, OBN data, and jointly towed-streamer and OBN data (the method of Figure 12) is generated, small scale features are better resolved on the joint imaging result and there is a lower noise level using the joint cost function then the other two methods.

For the method discussed above with regard to Figure 12, i.e., the method for multiple imaging a subsurface using shot-domain and receiver-domain datasets, this method 1. may include the steps of:

receiving (1200) a first shot-domain seismic dataset $D_1$;
generating (1204) a first image $r_1$ of the subsurface based on the first shot-domain seismic dataset $D_1$;
receiving (1202) a second receiver-domain seismic dataset $D_2$;
generating (1206) a second image $r_2$ of the subsurface based on the second receiver-domain seismic dataset $D_2$; and
combining (1208) the first image $r_1$ of the subsurface with the second image $r_2$ of the subsurface to generate a combined image $r$ of the subsurface.

According to some aspects of this embodiment, it is possible that:

2. the combined image uses a joint imaging of multiples of the first shot-domain seismic dataset $D_1$ and multiples of the second receiver-domain seismic dataset $D_2$.

3. the joint imaging of multiples involves applying a least squares migration.

4. the first shot-domain seismic dataset $D_1$ includes a down-going first dataset and an up-going first dataset, the down-going first dataset is forward extrapolated into the subsurface to generate a down-going forward extrapolated first dataset, and the up-going first dataset is reverse extrapolated into the subsurface to generate an up-going reverse extrapolated first dataset.

5. the down-going forward extrapolated first dataset and the up-going reverse extrapolated first dataset are used to calculate the first image of the subsurface.

6. the second shot-domain seismic dataset $D_2$ includes a down-going second dataset and an up-going second dataset, the down-going second dataset is forward extrapolated into the subsurface to generate a down-going forward extrapolated second dataset, and the up-going second dataset is reverse extrapolated into the subsurface to generate an up-going reverse extrapolated second dataset.

7. the down-going forward extrapolated second dataset and the up-going reverse extrapolated second dataset are used to calculate the second image of the subsurface.

8. first shot-domain seismic dataset corresponds to a towed streamer acquisition and the second receiver-domain seismic dataset corresponds to an ocean bottom sensor acquisition.

9. the first shot-domain seismic dataset and the second receiver-domain dataset correspond to a towed streamer acquisition.

10. the first shot-domain seismic dataset and the second receiver-domain dataset correspond to an ocean bottom sensor acquisition.

11. a computing system (1800) for multiple imaging a subsurface using shot-domain and receiver-domain datasets includes,

> an interface (1808) configured to receive (1200) a first shot-domain seismic dataset $D_1$ and also to receive (1202) a second receiver-domain seismic dataset $D_2$; and
> a processor (1802) connected to the processor and configured to,
> generate (1204) a first image $r_1$ of the subsurface based on the first shot-domain seismic dataset $D_1$,
> generate (1206) a second image $r_2$ of the subsurface based on the second shot-domain seismic dataset $D_2$, and
> combine (1208) the first image $r_1$ of the subsurface with the second image $r_2$ of the subsurface to generate a combined image $r$ of the subsurface.

The system may be configured such that,

12. the combined image uses a joint imaging of multiples of the first shot-domain seismic dataset $D_1$ and the second receiver-domain seismic dataset $D_2$.

13. the joint imaging of multiples involves applying a least squares migration.

14. the first shot-domain seismic dataset $D_1$ includes a down-going first dataset and an up-going first dataset, the down-going first dataset is forward extrapolated into the subsurface to generate a down-going forward extrapolated first dataset, and the up-going first dataset is reverse extrapolated into the subsurface to generate an up-going reverse extrapolated first dataset.

15. the down-going forward extrapolated first dataset and the up-going reverse extrapolated first dataset are used to calculate the first image of the subsurface.

16. the second shot-domain seismic dataset $D_2$ includes a down-going second dataset and an up-going second dataset, the down-going second dataset is forward extrapolated into the subsurface to generate a down-going forward extrapolated second dataset, and the up-going second dataset is reverse extrapolated into the subsurface to generate an up-going reverse extrapolated second dataset.

17. the down-going forward extrapolated second dataset and the up-going reverse extrapolated second dataset are used to calculate the second image of the subsurface.

18. the first shot-domain seismic dataset corresponds to a towed streamer acquisition.

19. the second receiver-domain seismic dataset corresponds to an ocean bottom sensor acquisition.

20. the first shot-domain seismic dataset and the second receiver-domain dataset correspond to a towed streamer acquisition.

21. the first shot-domain seismic dataset and the second receiver-domain dataset correspond to an ocean bottom sensor acquisition.

Another novel imaging method is now discussed, and this method is referred to as the "optimized multiple migration using a cross-talk attenuated migration as a starting point." The optimized multiple imaging may produce an image of the subsurface with reduced cross-talk contamination. Optimized migrations may involve many iterations, which can be costly. In this embodiment, an image of the subsurface after cross-talk attenuation is used as a starting point for an optimized multiple imaging approach. In the case the image of the subsurface after cross-talk attenuation is a good representation of the subsurface, it may accelerate convergence of the optimized migration problem. This cross-talk attenuated image may optionally include data regularization and/or interpolation for the forward and/or reverse propagated wavefields.

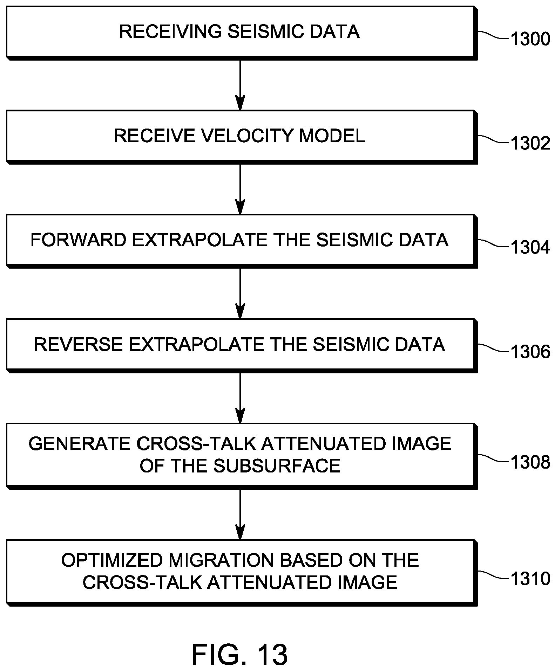

The method includes, as illustrated in Figure 13, a step 1300 of receiving seismic data $D$, which may include surface related multiples $M$ after excitation of a source $S$. The method receives in step 1302 a velocity model corresponding to seismic wavefield extrapolation in the subsurface. Then, in step 1304, the method forward extrapolates the seismic data $D$ to generate forward extrapolated seismic data (at a given datum) using the velocity model. In step 1306, the method reverse extrapolates the seismic data (at the same datum) to generate reverse extrapolated seismic data using the velocity model. In step 1308, the method generates an image $r$ of the subsurface with reduced cross-talk, using the forward extrapolated seismic data and the reverse extrapolated seismic data. The cross-talk attenuated image is used then in step 1310, as a starting point, for an optimized migration based on any of the above discussed processes.

The seismic data received in step 1300 relates to any data type. For example, the seismic data may include up-going and down-going datasets. The up-going and down-going datasets relate to receiver-side primary and ghost arrivals, or the up-going and down-going datasets relate to source-side primary and ghost arrivals. In one application, it is possible that the up-going dataset is used for up-going and down-going datasets. In another application, the up-going dataset is extrapolated to the free-surface and used for up-going and down-going datasets. The seismic data may be pre-processed prior to the step 1304. The step 1308 of generating an image of the subsurface with reduced cross-talk may, for example, involve subtracting cross-talk from the image of the subsurface after multiple imaging as previously discussed. Alternatively, it may involve using an imaging condition which results in less cross-talk, or any other approach which reduces cross-talk compared to a cross-correlation or deconvolution imaging condition. The step 1310 of optimized migration may be a migration of primaries, a migration of multiples, or a migration of primaries and multiples, as also discussed above.

As an example of step 1310, it is possible to solve the following equation for $r$:

$$D_F^T u_R \approx D_F^T D_F r$$

by:

- calculating the starting residual, $\epsilon_0 = D_F^T u_R$;
- applying a Hessian $\left(D_F^T D_F\right)$ to the cross-talk attenuated image, $r_{ca}$: $h_{ca} = D_F^T D_F r_{ca}$. This step may involve modelling data using the cross-talk attenuated image, and then migrating using the modelled data;
- calculating the step length and then summing over all values in the images: $\alpha = \dfrac{\sum \epsilon_0 * \epsilon_0}{\sum \epsilon_0 * h_{ca}}$;
- updating the residual: $\varepsilon_1 = \varepsilon_0 - \alpha h_{ca}$;
- initializing the image of the subsurface: $r_1 = \alpha \varepsilon_0$; and
- further updating the image using the updated residual $\varepsilon_1$ and the initial image of the subsurface, $r_1$, e.g., using steepest descent, inverse Hessian or conjugate gradients.

After deriving an image of the subsurface with (1) no cross-talk attenuation, (2) with cross-talk attenuation, and (3) optimized multiple imaging using the image of the subsurface with cross-talk attenuation as a starting point as discussed above with regard to Figure 13, it was found that the optimized multiple imaging shows an improvement in lateral resolution.

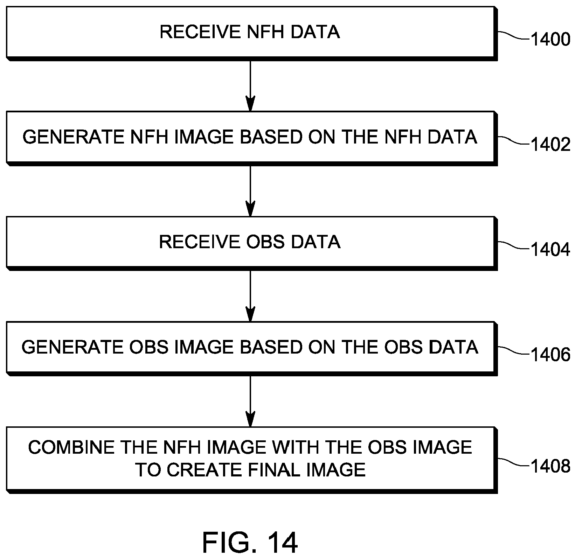

Another novel imaging method is now discussed with regard to Figure 14. This method is referred herein to as the "combined OBS multiple imaging with nearfield sensor imaging." As previously discussed, ocean bottom sensor (node or cable) data may be used for multiple imaging. This may fill in acquisition gaps relating to primary imaging related to the node spacing. OBS multiple imaging, however, may be limited in (vertical) resolution due to the maximum frequency available in the recorded data (e.g., 250 Hz for 2 ms sampled data, or 125 Hz for 4 ms sampled data). For OBS campaigns, nearfield sensor data may also be available, which may also be used for imaging. Nearfield sensors may be nearfield hydrophones (NFH) or other nearfield sensors, e.g., geophones or accelerometers. A nearfield sensor is a sensor that is typically placed on an active source, on a passive source, or very close to the source, e.g., less than 25 m. For this discussion, the term "NFH" is used to mean any type of nearfield sensor. Such images, however, may be contaminated by noise at low frequencies due to direct arrival contamination, residual source signature bubble or high noise levels, as the sensor sits next to the source. For example, NFH data may be too noisy to use under 20 Hz to 40 Hz. Nearfield sensors may also relate to mini-streamers towed, for example, beneath the source.

In one embodiment, it is proposed to combine multiple imaging from ocean bottom sensor data with NFH primary imaging (e.g., using active or passive NFH recordings). The active NFHs may be attached to the firing source. The passive NFHs may be attached to a non-firing source towed by the same vessel as the active source. Alternatively, the passive NFHs, which are attached to a non-firing source, may be towed by a second vessel, and situated more than 25 m from the firing source.

This method, as illustrated in Figure 14, may include a step 1400 of receiving NFH data following excitation of a first active seismic source, a step 1402 of generating a NFH image of the subsurface using the NFH data, a step 1404 of receiving OBS data following the excitation of a second active seismic source (which may be the same source as in step 1400, or a different source), a step 1406 of generating an OBS image of the subsurface using the OBS data, and a step 1408 of combining the NFH image of the subsurface with the OBS image of the subsurface to create a final image of the surface. This step may use the same approach as the step 1208 discussed above with regard to Figure 12.

The method may include one or more of the following steps: the NFH data is processed to remove bubble contamination, and/or the NFH data is processed to remove direct-arrival contamination, and/or the NFH data is processed to remove multiples, and/or the NFH data is processed to remove free-surface ghosts. In one application, the NFH data is recorded at a smaller sample rate to the OBS data. The OBS image of the subsurface may be generated using multiple imaging. The NFH image of the subsurface may be generated using primary imaging. The OBS image of the subsurface may be generated using an optimized migration. The OBS imaging may be performed in the receiver domain.

In one application, the OBS image of the subsurface and the NFH image of the subsurface overlap in frequency. A high-cut filter may be applied to the OBS data or the OBS image of the subsurface, and a low-cut filter may be applied to the NFH data or the NFH image of the subsurface before they are combined. The step 1408 of combining the NFH image of the subsurface and the OBS image of the subsurface may include summing them together.

Further, the method discussed in Figure 14 may be modified so that a filter is applied to the NFH image of the subsurface to match amplitudes to the OBS image of the subsurface, and/or a filter is applied to the OBS image of the subsurface to match amplitudes to the NFH image of the subsurface. The filter may be derived in a frequency range where the NFH image of the subsurface and the OBS image of the subsurface both have a signal content. In one application, both the NFH data and/or OBS data are pre-processed.

An imaging method 1. that combines ocean bottom sensor, OBS, multiple imaging with nearfield hydrophone, NFH, imaging, includes the steps of

receiving (1400) NFH data, which is generated by an excitation of a first active source;
generating (1402) a NFH image of a subsurface, which is surveyed with the first active source, based on the NFH data;
receiving (1404) OBS data, which is generated by the excitation of a second active source, which is different from the first active source, and the OBS is located on a water bottom;
generating (1406) an OBS image of the subsurface, based on the OBS data; and
combining (1408) the NFH image of the subsurface with the OBS image of the subsurface to create a final image of the subsurface.

The method 1. may include one or more of the following aspects.

2. the NFH data is recorded at a smaller sample rate than the OBS data.
3. the NFH image of the subsurface is generated using primary imaging.
4. the OBS image of the subsurface is generated using an optimized migration.
5. the step of generating the OBS image is performed in the receiver domain.
6. the OBS image of the subsurface and the NFH image of the subsurface overlap in frequency.
7. applying a high-cut filter to the OBS data or the OBS image of the subsurface; and
applying a low-cut filter to the NFH data or the NFH image of the subsurface before the OBS image is combined with the NFH image.
8. applying a filter to the NFH data or the NFH image to match amplitudes to the NFH image of the subsurface to the OBS image of the subsurface.
9. the step of combining sums the NFH image of the subsurface with the OBS image of the subsurface.
10. the NFH is mounted on the first active source, mounted on a passive source, or less than 25 m away from the first active source.
11. A computing system (1800) for imaging that combines ocean bottom sensor, OBS, multiple imaging with nearfield hydrophone, NFH, imaging, may include

an interface (1808) configured to receive (1400) NFH data, which is generated by an excitation of a first active source, and also to receive (1404) OBS data, which is generated by the excitation of a second active source, which is different from the first active source, and the OBS is located on a water bottom; and
a processor (1802) connected to the interface (1808) and configured to,
generate (1402) a NFH image of a subsurface, which is surveyed with the first active source, based on the NFH data,
generate (1406) an OBS image of the subsurface, based on the OBS data, and

combine (1408) the NFH image of the subsurface with the OBS image of the subsurface to create a final image of the subsurface.

The system may include one or more of the following aspects,

12. the NFH data is recorded at a smaller sample rate than the OBS data.
13. the NFH image of the subsurface is generated using primary imaging.
14. the OBS image of the subsurface is generated using an optimized migration.
15. generating the OBS image is performed in the receiver domain.
16. the OBS image of the subsurface and the NFH image of the subsurface overlap in frequency.
17. the processor is further configured to:

apply a high-cut filter to the OBS data or the OBS image of the subsurface; and
apply a low-cut filter to the NFH data or the NFH image of the subsurface before the OBS image is combined with the NFH image.

18. applying a filter to the NFH data or the NFH image to match amplitudes of the NFH image of the subsurface to the OBS image of the subsurface.
19. the processor is further configured to sum the NFH image of the subsurface with the OBS image of the subsurface to obtain the combined image.
20. the NFH is mounted on the first active source, mounted on a passive source, or positioned less than 25 m away from the first active source.

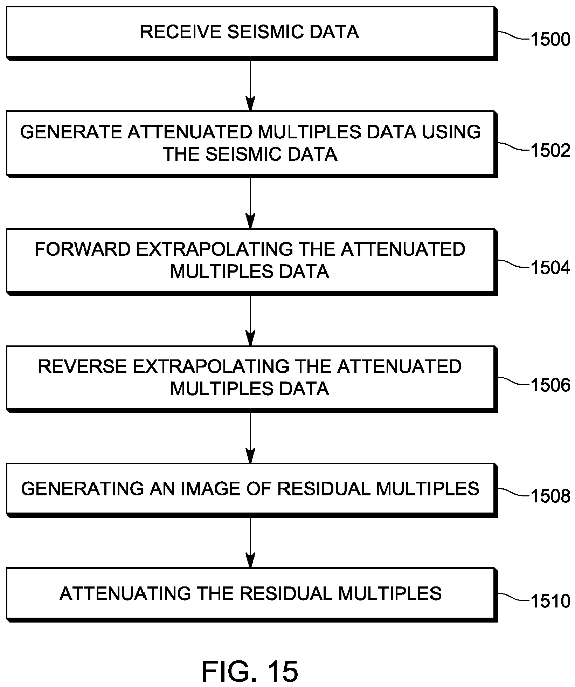

Another novel method is now discussed with regard to Figure 15, and this method is called herein "attenuation of residual multiples." Multiple prediction based on SRMM [2] requires the multiple generators to have been adequately recorded by the sensors. As previously discussed, in shallow water regions, this may be problematic, as such an image of the subsurface used for multiple prediction may be generated using multiple imaging [4]. The flow of such method includes a step of receiving input data which includes multiples, a step of multiple imaging, a step of multiple modelling/prediction using SRMM, and a step of multiple attenuation by adaptively subtracting the results obtained in the step of multiple modelling from the input data.

However, according to the new method, the step of multiple imaging is performed after prior multiple attenuation. More specifically, the method starts with a step 1500 of receiving recorded data following excitation of a seismic source, a step 1502 of generating attenuated multiples data using the recorded data (e.g., the recorded data after up-down deconvolution; the attenuated multiples data may be generated with one of the methods previously discussed), a step 1504 of forward extrapolating the attenuated multiples data to create forward extrapolated attenuated multiples data, a step 1506 of reverse extrapolating the attenuated multiples data to create reverse extrapolated attenuated multiples data, a step 1508 of generating an image of residual multiples using the forward extrapolated attenuated multiples data and the reverse extrapolated attenuated multiples data (i.e., wave-equation deconvolution demultiple); and a step 1510 of attenuating residual multiples in the recorded data using the image of residual multiples.

The method discussed above may be modified to include a step of preprocessing the recorded data and/or the attenuated multiples data. The recorded data and/or attenuated multiples data may relate to receiver-side primary or ghost arrivals. The recorded data and/or attenuated multiples data may relate to source-side primary or ghost arrivals. An up-going dataset may be used for up-going and down-going datasets. A down-going dataset may be used for up-going and down-going datasets. The up-going dataset may be extrapolated to the free-surface and used for up-going and down-going datasets. In step 1510, the residual multiples may be attenuated in the attenuated multiples data. The step 1510 of attenuating the residual multiples may involve multiple modelling using the approach of [2] followed by a straight subtraction or an adaptive subtraction.

A couple of implementations of this method are now discussed. In a first implementation, the recorded data in step 1500 may be ocean bottom node data. The attenuated multiples data in step 1502 may be the recorded data after up-down deconvolution. The image of the residual multiples in step 1508 may correspond to multiple generators not being attenuated by up-down deconvolution. The residual multiples in the recorded data may be attenuated by: (1) modelling multiples using SRMM based on the attenuated multiples data (after up-down deconvolution), and (2) subtracting the modelled multiples from the recorded data or attenuated multiples data. This last sub-step may be a straight subtraction or an adaptive subtraction.

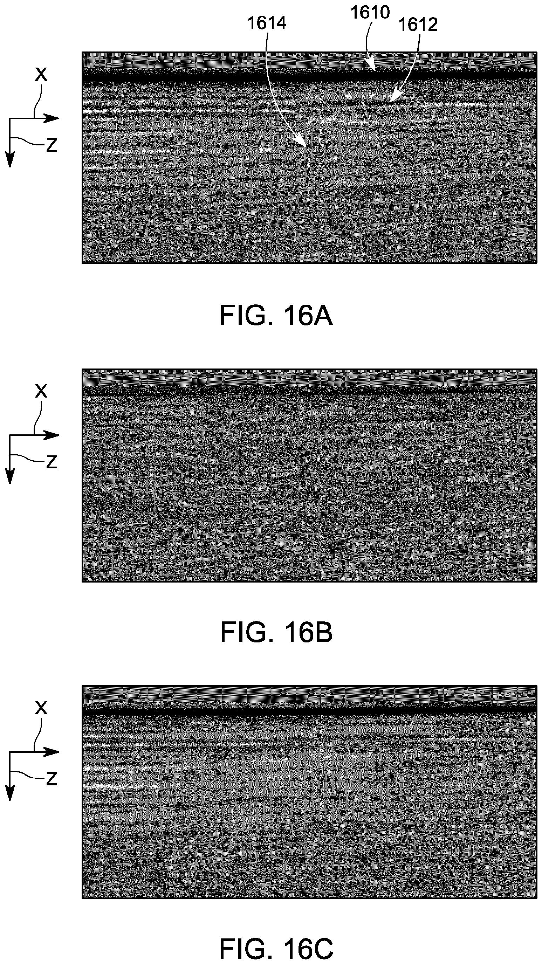

After the input seismic data has been processed by applying multiple imaging using hydrophone data, Figure 16A shows a strong water-bottom reflection 1610, cross-talk 1612, and other weaker reflectors 1614 (e.g., gas). The hydrophone data input to this test was after source deghosting. The direct arrival was muted so that the approach would be limited to imaging of multiples only (in practice the approach produces similar results whether the direct arrival is included or not). Figure 16B shows the multiple imaging of the attenuated multiples data (achieved with the method illustrated in Figure 15), which contains significantly less signal at the water-bottom due to the fact the multiples reverberating in the water layer have been attenuated by up-down deconvolution. The image displayed in Figure 16B corresponds to multiple generators not addressed by the application of up-down deconvolution. Figure 16C shows the difference between Figure 16A and the multiple generators that were addressed by up-down deconvolution. In this case, it can be seen how the up-down deconvolution has addressed pseudo-horizontal generators, and the remaining multiples in the data correspond to multiple generators with more lateral complexity. Note that Figures 16A to 16C were presented and discussed in [11].

In a second implementation of the method illustrated in Figure 15, the recorded data in step 1500 may be towed streamer data, and the attenuated multiples data in step 1502 may be the recorded data after MWD [3]. The image of the residual multiples in step 1508 may correspond to multiple generators not being addressed by MWD. The residual multiples in the recorded data may be attenuated by: modelling multiples using SRMM based on the attenuated multiples data (after MWD), or by subtracting the modelled multiples from the recorded data or attenuated multiples data. In one embodiment, this last step may be a straight subtraction or an adaptive subtraction.

In a third implementation of the method of Figure 15, the recorded data in step 1500 may be land data and the attenuated multiples data in step 1502 may be the recorded data after Radon demultiple or surface-consistent deconvolution demultiple. The image of residual multiples in step 1508 may correspond to multiple generators not being addressed by Radon demultiple. Residual multiples in the recorded data may be attenuated by: modelling multiples using SRMM based on the attenuated multiples data (after Radon demultiple), or by subtracting the modelled multiples from the recorded data or attenuated multiples data. This last step may be a straight subtraction or an adaptive subtraction. In practice any demultiple approach may be used for step 1502.

The above embodiments related to Figure 15 have presented various algorithms for processing input seismic data. Those embodiments are now summarized for a better understanding of the claimed methods. Literal references are provided for each embodiment and numeral references are provided for the various features associated with a given embodiment. The following embodiments are just exemplary and not intended to limit the invention. The features for the embodiments are listed with a corresponding numeral reference and each feature may work with any other feature of a respective embodiment. Note that all these features are disclosed above and the following section only organizes these features in an easy to follow way. All the features listed next may be implemented into a computing device such that these calculations are automatically performed. Thus, the processor of a computing device may be configured to execute any of the following features, in combination or not. However, the following list of features is not intended to be exhaustive and other combinations of these features are contemplated.

1. A method for attenuating residual multiples in a seismic dataset includes,

    receiving (1500) a seismic dataset recorded with plural receivers over a subsurface;
    generating (1502) attenuated multiples data using the seismic dataset;
    forward extrapolating (1504) the attenuated multiples data to create forward extrapolated attenuated multiples data;
    reverse extrapolating (1506) the attenuated multiples data to create reverse extrapolated attenuated multiples data;
    generating (1508) an image of residual multiple generators using the forward extrapolated attenuated multiples data and the reverse extrapolated attenuated multiples data; and
    attenuating (1510) the residual multiples in the seismic dataset using the image of the residual multiple generators.

According to various aspects of this method,
2. the residual multiple generators relate to receiver-side multiples.
3. the residual multiples relate to source-side multiples.
4. the method may further include attenuating the residual multiples in the attenuated multiples data.
5. the attenuated multiples data is generated using a deconvolution.
6. the seismic data is ocean bottom data and the attenuated multiple data is after up-down deconvolution.
7. the residual multiples correspond to the attenuated multiples data.
8. the attenuated multiples data is the seismic dataset from which a model-based water-layer demultiple model is subtracted.
9. the seismic dataset is land data and the attenuated multiples data is the seismic dataset from which a surface-consistent demultiple model is subtracted.
10. the image of the residual multiples corresponds to one of multiple generators not being attenuated by up-down deconvolution, or multiple generators not being attenuated by a model-based water-layer demultiple model, or multiple generators not being attenuated by a Radon demultiple model, or multiple generators not being attenuated by a deconvolution.

11. According to another embodiment, there is a computing system (1800) for attenuating residual multiples in a seismic dataset, and the system (1800) includes,

an interface (1808) configured to receive (1500) a seismic dataset recorded with plural receivers over a sub-surface; and
a processor (1802) connected to the interface (1808) and configured to,
generate (1502) attenuated multiples data using the seismic dataset,
forward extrapolate (1504) the attenuated multiples data to create forward extrapolated attenuated multiples data,
reverse extrapolate (1506) the attenuated multiples data to create reverse extrapolated attenuated multiples data,
generate (1508) an image of residual multiple generators using the forward extrapolated attenuated multiples data and the reverse extrapolated attenuated multiples data, and
attenuate (1510) the residual multiples in the seismic dataset using the image of the residual multiple generators.

The system may be configured such that,

12. the residual multiples relate to receiver-side multiples.
13. the residual multiples relate to source-side multiples.
14. the processor is further configured to attenuate residual multiples in the attenuated multiples data.
15. the attenuated multiples data is generated using a deconvolution.
16. the seismic data is ocean bottom data and the attenuated multiple data is recorded data after up-down deconvolution.
17. the residual multiples correspond to the attenuated multiples data.
18. the attenuated multiples data is the seismic dataset from which a model-based water-layer demultiple model is subtracted.
19. the seismic dataset is land data and the attenuated multiples data is the seismic dataset from which a surface-consistent deconvolution model is subtracted.
20. the image of the residual multiples corresponds to one of multiple generators not being attenuated by up-down deconvolution, or multiple generators not being attenuated by a model-based water-layer demultiple model, or multiple generators not being attenuated by a Radon demultiple model, or multiple generators not being attenuated by a deconvolution.

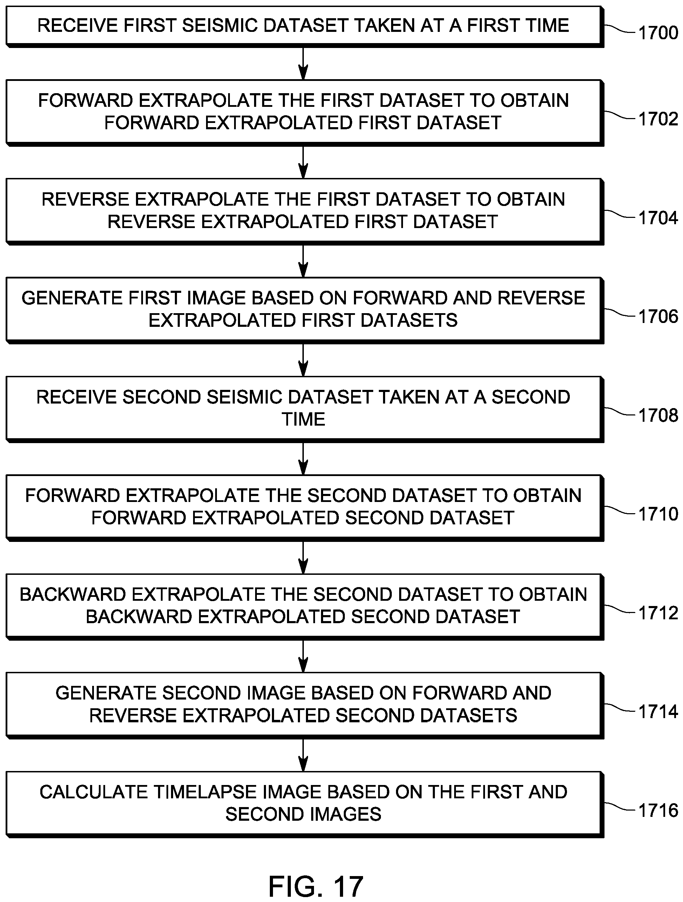

Another novel method is now discussed with regard to Figure 17. The method is referred to as "timelapse (also known as 4D) imaging." In areas where it is necessary to monitor changes in the subsurface, it is possible to acquire two or more vintages of seismic data to compare and see how a reservoir has changed over time. The data input to such studies may be any type of recorded data. A first vintage may be towed-streamer data, and a second vintage may also be towed-streamer. Alternatively, a first vintage may be towed-streamer data, and a second vintage may be OBN data. Any combination of data types may be used for timelapse studies.

Lecerf et al. [10] describe a multiple imaging approach which includes the steps of separately imaging up-going and down-going wavefields, combining the images, and optionally repeating the approach using a second survey for the purpose of timelapse studies. Different from this traditional approach, the method illustrated in Figure 17 uses a single multiple imaging step for each vintage of a timelapse campaign. More specifically, the method includes a step 1700 of receiving a first dataset recorded at a sensor following excitation of a first seismic source at a first time, a step 1702 of forward extrapolating the first dataset to generate a forward extrapolated first dataset, where the extrapolation can extend to any desired datum, a step 1704 of reverse extrapolating the first dataset to generate a reverse extrapolated first dataset (usually at the datum for the forward extrapolation), a step 1706 of applying a first imaging condition to generate a first image of the subsurface using the forward extrapolated first dataset and the reverse extrapolated first dataset, a step 1708 of receiving a second dataset recorded at a sensor (the same or different from the sensor in step 1700) following excitation of a second seismic source at a second time, which is later than the first time, a step 1710 of forward extrapolating the second dataset to generate a forward extrapolated second dataset, a step 1712 of reverse extrapolating the second dataset to generate a reverse extrapolated second dataset, a step 1714 of applying a second imaging condition (which may be the same or different from the first condition), to generate a second image of the subsurface using the forward extrapolated second dataset and the reverse extrapolated second dataset, and a step 1716 of calculating a timelapse difference by subtracting the first image of the subsurface from the second image of the subsurface.

In one application, the first and second datasets correspond to any recorded data type. It is possible that the first and second datasets correspond to the same data type, or to different data types. The first and/or second dataset is after a preprocessing step. In one application, the first and/or second dataset is after wavefield separation (up-going or down-going). In one application, it is possible that the first and/or second datasets are before wavefield separation (e.g., working directly with hydrophone or particle velocity data).

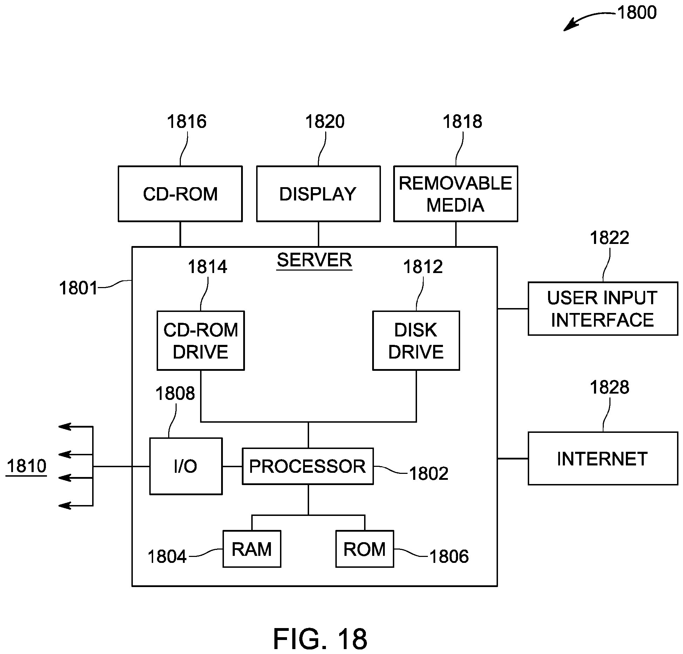

Any of the above discussed methods may be implemented in a computing device, whose schematic is shown in Figure 18. Hardware, firmware, software or a combination thereof may be used to perform the various steps and operations of the above-described methods. The computing device 1800 may include a server 1801, which has a central processor (CPU) 1802 coupled to a random access memory (RAM) 1804 and to a read-only memory (ROM) 1806. The ROM 1806 may also be other types of storage media to store programs, such as programmable ROM (PROM), erasable PROM (EPROM), etc. The CPU 1802 communicates with other internal and external components through input/output (I/O) circuitry 1808 and bussing 1810, to receive the data acquired using a streamer, OBN, DAS, land nodes, etc. and output one or more of the multiples, the primaries and/or the image of the geological formation. The processor 1802 carries out a variety of functions as are known in the art, as dictated by software and/or firmware instructions.

The server 1801 may also include one or more data storage devices, including hard drives 1812, CD-ROM drives 1814, and other hardware capable of reading and/or storing information such as DVD, etc. In one embodiment, software for carrying out the above-discussed methods may be stored and distributed on a CD-ROM or DVD 1816, a USB storage device 1818 or other form of media capable of portably storing information. These storage media may be inserted into, and read by, devices such as the CD-ROM drive 1814, the disk drive 1812, etc. Server 1801 may be coupled to a display 1820, which may be any type of known display or presentation screen, such as LCD, plasma display, cathode ray tubes (CRT), etc. The image of the geological formation or graphs similar to the ones in Figures 6A to 6E, 10A to 10C, and 16A to 16C may be shown on a display 1820. A user input interface 1822 is provided and may include one or more user interface mechanisms such as a mouse, keyboard, microphone, touchpad, touch screen, voice-recognition system, etc.

Server 1801 may be coupled to other devices, such as sources, receivers, etc. The server may be part of a larger network configuration as in a global area network (GAN) such as the Internet 1828, which allows ultimate connection to various landline and/or mobile computing devices.

The disclosed embodiments enable processing seismic data that identify multiples. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**References**

The entire content of all the publications listed herein is incorporated by reference in this patent application.

[1] Biersteker, J. [2001] MAGIC: Shell's surface multiple attenuation technique. 71st SEG Annual International Meeting, Expanded Abstracts, 1301-1304.

[2] Pica, A., Poulain, G., David, B., Magesan, M., Baldock, S., Weisser, T., Hugonnet, P., and Herrmann, P., 2005, 3D surface-related multiple modelling, EAGE conference proceedings.

[3] Wang et al. "Model-based water-layer demultiple", 81st Annual International Meeting SEG, Expanded Abstracts, pp. 3551-3555 (2011).

[4] Poole, G., Shallow water surface related multiple attenuation using multi-sailline 3D deconvolution imaging. 81st EAGE Conference and Exhibition, Extended Abstracts, Tu R1 5.

[5] Wiggins, W. [1988] Attenuation of complex water-bottom multiples by wave-equation-based prediction and subtraction, Geophysics, Vol52, P. 1527-1539.

[6] Whitmore, N.D., Valenciano, A.A., Sollner, W. and Lu, S. [2010] Imaging of primaries and multiples using a dual-sensor towed streamer. 80th Annual International Meeting, SEG, Expanded Abstracts.

[7] Lu, S., Whitmore, N.D., Valenciano, A.A., Chemingui, N. and Ronholt, G. [2016] A practical crosstalk attenuation method for separated wavefield imaging. 86th Annual International Meeting, SEG, Expanded abstracts.

[8] Valenciano, A., and Biondi, B. [2003] 2-D deconvolution imaging condition for shot-profile migration. 73rd Annual International Meeting, SEG, Expanded abstracts.

[9] Berkhout, A. J. and Verschuur, D. J. [1997] Estimation of multiple scattering by iterative inversion, Part I: theoretical consideration. Geophysics, 62, 1586-1595.

[10] Lecerf, D., Chemingui, N., Valenciano, A., and Lu, S. [2014] Seismic imaging using higher-order reflections. US patent 9,689,999.

[11] Poole, G., Jin, Z., Irving, A., and Refaat, R. [2022] Adaption-free OBN demultiple using up-down deconvolution and wave-equation deconvolution. EAGE conference proceedings.

**Claims**

1. A method for multiple attenuation in seismic data associated with a subsurface, the method comprising:

   receiving (900) seismic data $D$ for a plurality of shots and a plurality of receivers, wherein the seismic data $D$ include multiples $M$ associated with a free surface, wherein the seismic data $D$ is in a space-time domain;
   obtaining (902) a multiple generator (722), which is located within the subsurface and is responsible for generating the multiples $M$;
   calculating (904) a source-side multiple model $M_S$ based on the seismic data $D$ and the multiple generator (722);
   estimating (906) an image $r$ of the multiple generator (722) based on a multiple periodicity method applied to the seismic data $D$;
   calculating (908) a receiver-side multiple model $M_R$ by applying wavefield propagation to the seismic data $D$ and the image $r$,
   generating (910) demultiple data $DD$ by subtracting from the seismic data $D$ the source-side multiple model $Ms$ and the receiver-side multiple model $M_R$; and
   generating (912) a final image of a geological formation in the subsurface based on the demultiple data $DD$.

2. The method of Claim 1, wherein the source-side multiple model Ms is calculated in a receiver-domain.

3. The method of Claim 1, wherein the source-side multiple model $M_S$ is based on estimating a Green's function of a multiple generator based on knowledge of a multiple generator depth, a velocity of sound in the subsurface, and source and receiver positions.

4. The method of Claim 1, wherein the receiver-side multiple model $M_R$ is calculated in a shot-domain.

5. The method of Claim 1, wherein the receiver-side multiple model $M_R$ includes multiples reflected from a plurality of multiple generators.

6. The method of Claim 1, wherein the step of calculating the image $r$ further comprises:
   applying a correlation or deconvolution between a forward-propagated and a reverse-propagated wavefield.

7. The method of Claim 1, wherein the step of calculating the image $r$ further comprises:
   applying a least squares migration.

8. The method of Claim 7, wherein the least squares migration involves a sparse inversion.

9. The method of Claim 1, wherein pure-source side multiples are attenuated from the seismic data to generate pure-source side attenuated multiples data, and the pure-source side attenuated multiples data is used in the multiple periodicity method.

10. A computing system (1800) for multiple attenuation in seismic data associated with a subsurface, the computing system (1800) comprising:

    an interface (1808) configured to receive (900) seismic data $D$ for a plurality of shots and a plurality of receivers, wherein the seismic data $D$ include multiples $M$ associated with a free surface, wherein the seismic data D is in a space-time domain; and
    a processor (1802) connected to the interface (1808) and configured to,
    obtain (902) a multiple generator (722), which is located within the subsurface and is responsible for generating the multiples $M$;

calculate (904) a source-side multiple model $Ms$ based the seismic data $D$ and the multiple generator (722);

estimate (906) an image $r$ of the multiple generator (722) based on a multiple periodicity method applied to the seismic data $D$;

calculate (908) a receiver-side multiple model $M_R$ by applying wavefield propagation to the seismic data $D$ and the image $r$,

generate (910) demultiple data $DD$ by subtracting from the seismic data $D$ the source-side multiple model $Ms$ and the receiver-side multiple model $M_R$; and

generate (912) a final image of a geological formation in the subsurface based on the demultiple data $DD$.

11. The system of Claim 10, wherein the source-side multiple model $M_S$ is calculated in a receiver-domain.

12. The system of Claim 10, wherein the receiver-side multiple model $M_S$ is based on estimating a Green's function of a multiple generator reflection based on knowledge of a multiple generator depth, a velocity of sound in the subsurface, and source and receiver positions.

13. The system of Claim 10, wherein the receiver-side multiple model $M_R$ is calculated in a shot-domain.

14. The system of Claim 10, wherein the receiver-side multiple model $M_R$ includes multiples reflected from a plurality of multiple generators.

15. The system of Claim 10, wherein pure-source side multiples are attenuated from the seismic data to generate pure-source side attenuated multiples data, and the pure-source side attenuated multiples data is used in the multiple periodicity method.

EP 4 080 250 A1

FIG. 1

FIG. 2A

FIG. 2B

FIG. 2C

FIG. 3

FIG. 4

FIG. 5

FIG. 6A

FIG. 6B

FIG. 6C

FIG. 6D

FIG. 6E

FIG. 7A

FIG. 7B

FIG. 8A

FIG. 8B

FIG. 8C

FIG. 8D

RECEIVE INPUT DATA — 900

OBTAIN MULTIPLE GENERATOR — 902

CALCULATE SOURCE-SIDE MULTIPLE MODEL — 904

ESTIMATE IMAGE USING INPUT DATA — 906

CALCULATE RECEIVER-SIDE MULTIPLE MODEL — 908

CALCULATE THE DEMULTIPLE DATA — 910

CALCULATE IMAGE OF SUBSURFACE — 912

FIG. 9

FIG. 10A

FIG. 10B

FIG. 10C

FIG. 11

RECEIVING SHOT-DOMAIN SEISMIC DATA ———1200

RECEIVING RECEIVER-DOMAIN SEISMIC DATA ———1202

DERIVE FIRST IMAGE BASED ON THE
SHOT-DOMAIN DATA ———1204

DERIVE SECOND IMAGE BASED ON THE
RECEIVER-DOMAIN DATA ———1206

COMBINE FIRST AND SECOND IMAGES TO
GENERATE COMBINED IMAGES ———1208

FIG. 12

```
┌─────────────────────────────────────────┐
│        RECEIVING SEISMIC DATA            │──1300
└─────────────────────────────────────────┘
                    │
                    ▼
┌─────────────────────────────────────────┐
│        RECEIVE VELOCITY MODEL            │──1302
└─────────────────────────────────────────┘
                    │
                    ▼
┌─────────────────────────────────────────┐
│   FORWARD EXTRAPOLATE THE SEISMIC DATA   │──1304
└─────────────────────────────────────────┘
                    │
                    ▼
┌─────────────────────────────────────────┐
│   REVERSE EXTRAPOLATE THE SEISMIC DATA   │──1306
└─────────────────────────────────────────┘
                    │
                    ▼
┌─────────────────────────────────────────┐
│  GENERATE CROSS-TALK ATTENUATED IMAGE    │──1308
│         OF THE SUBSURFACE                │
└─────────────────────────────────────────┘
                    │
                    ▼
┌─────────────────────────────────────────┐
│    OPTIMIZED MIGRATION BASED ON THE      │──1310
│     CROSS-TALK ATTENUATED IMAGE          │
└─────────────────────────────────────────┘
```

FIG. 13

RECEIVE NFH DATA ~1400

GENERATE NFH IMAGE BASED ON THE NFH DATA ~1402

RECEIVE OBS DATA ~1404

GENERATE OBS IMAGE BASED ON THE OBS DATA ~1406

COMBINE THE NFH IMAGE WITH THE OBS IMAGE TO CREATE FINAL IMAGE ~1408

FIG. 14

```
┌─────────────────────────────────────────────┐
│            RECEIVE SEISMIC DATA              │──1500
└─────────────────────────────────────────────┘
                      │
                      ▼
┌─────────────────────────────────────────────┐
│   GENERATE ATTENUATED MULTIPLES DATA USING   │──1502
│              THE SEISMIC DATA                │
└─────────────────────────────────────────────┘
                      │
                      ▼
┌─────────────────────────────────────────────┐
│     FORWARD EXTRAPOLATING THE ATTENUATED     │──1504
│               MULTIPLES DATA                 │
└─────────────────────────────────────────────┘
                      │
                      ▼
┌─────────────────────────────────────────────┐
│     REVERSE EXTRAPOLATING THE ATTENUATED     │──1506
│               MULTIPLES DATA                 │
└─────────────────────────────────────────────┘
                      │
                      ▼
┌─────────────────────────────────────────────┐
│   GENERATING AN IMAGE OF RESIDUAL MULTIPLES  │──1508
└─────────────────────────────────────────────┘
                      │
                      ▼
┌─────────────────────────────────────────────┐
│       ATTENUATING THE RESIDUAL MULTIPLES     │──1510
└─────────────────────────────────────────────┘
```

FIG. 15

FIG. 16A

FIG. 16B

FIG. 16C

RECEIVE FIRST SEISMIC DATASET TAKEN AT A FIRST TIME ⌐1700

FORWARD EXTRAPOLATE THE FIRST DATASET TO OBTAIN FORWARD EXTRAPOLATED FIRST DATASET ⌐1702

REVERSE EXTRAPOLATE THE FIRST DATASET TO OBTAIN REVERSE EXTRAPOLATED FIRST DATASET ⌐1704

GENERATE FIRST IMAGE BASED ON FORWARD AND REVERSE EXTRAPOLATED FIRST DATASETS ⌐1706

RECEIVE SECOND SEISMIC DATASET TAKEN AT A SECOND TIME ⌐1708

FORWARD EXTRAPOLATE THE SECOND DATASET TO OBTAIN FORWARD EXTRAPOLATED SECOND DATASET ⌐1710

BACKWARD EXTRAPOLATE THE SECOND DATASET TO OBTAIN BACKWARD EXTRAPOLATED SECOND DATASET ⌐1712

GENERATE SECOND IMAGE BASED ON FORWARD AND REVERSE EXTRAPOLATED SECOND DATASETS ⌐1714

CALCULATE TIMELAPSE IMAGE BASED ON THE FIRST AND SECOND IMAGES ⌐1716

FIG. 17

1800

1816                 1820                 1818

CD-ROM          DISPLAY          REMOVABLE
                                  MEDIA

                                                      1822

                  1814      SERVER      1812      USER INPUT
1801                                              INTERFACE

                CD-ROM                DISK
                DRIVE                 DRIVE

         1808                                           1828

1810          I/O      PROCESSOR              INTERNET
                                    1802

                  RAM          ROM
         1804                        1806

FIG. 18

Europäisches
Patentamt

European
Patent Office

Office européen
des brevets

# EUROPEAN SEARCH REPORT

Application Number

EP 22 30 5571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 2 553 890 A (CGG SERVICES [FR]) 21 March 2018 (2018-03-21) * figures 1, 4a, 4b, 8 * * paragraph [0002] * * paragraph [0020] * * paragraph [0026] * * paragraph [0029] - paragraph [0031] * * paragraph [0042] * | 1-15 | INV. G01V1/36 |
| Y,D | POOLE G.: "Shallow Water Surface Related Multiple Attenuation Using Multi-Sailline 3D Deconvolution Imaging", 81ST EAGE CONFERENCE AND EXHIBITION 2019, [Online] 3 June 2019 (2019-06-03), pages 1-5, XP055952782, DOI: 10.3997/2214-4609.201900781 Retrieved from the Internet: URL:https://www.cgg.com/sites/default/files/2020-11/cggv_0000031992.pdf> [retrieved on 2022-08-19] * Summary * * Section Methodology, equation 1 * * Section Methodology, 4th, 5th and last paragraphs * * Section Methodology, Fig. 2j * * Section Methodology, equation 2 * * Section Real data examples, 1st paragraph * * Section Real data examples, Fig. 3 * | 1-15 | |
| Y,D | PING WANG ET AL: "Model-based water-layer demultiple", SEG SAN ANTONIO 2011 ANNUAL MEETING, 18 September 2011 (2011-09-18), pages 3551-3555, XP055349660, DOI: 10.1190/1.3627937 * Section Methodology, equations 3, 4 * | 3,12 | TECHNICAL FIELDS SEARCHED (IPC) G01V |

The present search report has been drawn up for all claims

| Place of search | Date of completion of the search | Examiner |
|---|---|---|
| The Hague | 23 August 2022 | Lameloise, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5571

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2022

| Patent document cited in search report | Publication date | Patent family member(s) | Publication date |
|---|---|---|---|
| GB 2553890 A | 21-03-2018 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9689999 B,  Lecerf, D., Chemingui, N., Valenciano, A., and Lu, S.

### Non-patent literature cited in the description

- **BERKHOUT ; VERSCHUUR.** *SRME,* 1997
- **BIERSTEKER, J.** MAGIC: Shell's surface multiple attenuation technique. *71st SEG Annual International Meeting,* 2001, 1301-1304
- **PICA, A. ; POULAIN, G. ; DAVID, B. ; MAGESAN, M. ; BALDOCK, S. ; WEISSER, T. ; HUGONNET, P. ; HERRMANN, P.** 3D surface-related multiple modelling. *EAGE conference proceedings,* 2005
- **WANG et al.** Model-based water-layer demultiple. *81st Annual International Meeting SEG,* 2011, 3551-3555
- **POOLE, G.** Shallow water surface related multiple attenuation using multi-sailline 3D deconvolution imaging. *81st EAGE Conference and Exhibition,* R1-5
- **WIGGINS, W.** Attenuation of complex water-bottom multiples by wave-equation-based prediction and subtraction. *Geophysics,* 1988, vol. 52, 1527-1539

- **WHITMORE, N.D. ; VALENCIANO, A.A. ; SOLLNER, W. ; LU, S.** Imaging of primaries and multiples using a dual-sensor towed streamer. *80th Annual International Meeting, SEG,* 2010
- **LU, S. ; WHITMORE, N.D. ; VALENCIANO, A.A. ; CHEMINGUI, N. ; RONHOLT, G.** A practical crosstalk attenuation method for separated wavefield imaging. *86th Annual International Meeting, SEG,* 2016
- **VALENCIANO, A. ; BIONDI, B.** 2-D deconvolution imaging condition for shot-profile migration. *73rd Annual International Meeting, SEG,* 2003
- **BERKHOUT, A. J. ; VERSCHUUR, D. J.** Estimation of multiple scattering by iterative inversion, Part I: theoretical consideration. *Geophysics,* 1997, vol. 62, 1586-1595
- **POOLE, G. ; JIN, Z. ; IRVING, A. ; REFAAT, R.** Adaption-free OBN demultiple using up-down deconvolution and wave-equation deconvolution. *EAGE conference proceedings,* 2022